Europäisches Patentamt

European Patent Office

Office européen des brevets

(19)

(11) **EP 1 593 224 B1**

(12) **EUROPEAN PATENT SPECIFICATION**

(45) Date of publication and mention
of the grant of the patent:
**02.08.2006 Bulletin 2006/31**

(21) Application number: **03704611.7**

(22) Date of filing: **13.02.2003**

(51) Int Cl.:
*H04L 1/06* (2006.01)     *H04B 7/06* (2006.01)

(86) International application number:
**PCT/EP2003/001441**

(87) International publication number:
**WO 2004/073248 (26.08.2004 Gazette 2004/35)**

(54) **SOFT-OUTPUT DETECTOR FOR DIFFERENTIAL TRANSMIT ANTENNA DIVERSITY FROM ORTHOGONAL DESIGNS**

SOFT-OUTPUT DETEKTOR FÜR DIFFERENTIELLE SENDEDIVERSITÄT VON ORTHOGONALEN DESIGNS

DETECTEUR A SORTIE PONDEREE POUR DIVERSITE D'ANTENNES DE TRANSMISSION DIFFERENTIELLE A PARTIR DE CONFIGURATIONS ORTHOGONALES

(84) Designated Contracting States:
**DE GB**

(43) Date of publication of application:
**09.11.2005 Bulletin 2005/45**

(73) Proprietor: **NTT DoCoMo, Inc.**
**Tokyo 100-6150 (JP)**

(72) Inventor: **BAUCH, Gerhard**
**80799 München (DE)**

(74) Representative: **HOFFMANN EITLE**
**Patent- und Rechtsanwälte**
**Arabellastrasse 4**
**81925 München (DE)**

(56) References cited:
**WO-A-02/052773**

• **BAUCH G: "CONCATENATION OF SPACE-TIME BLOCK CODES AND ''TURBO''-TCM" ICC '99. 1999 IEEE INTERNATIONAL CONFERENCE ON COMMUNICATIONS. CONFERENCE RECORD. VANCOUVER, CA, JUNE 6 - 10, 1999, IEEE INTERNATIONAL CONFERENCE ON COMMUNICATIONS, NEW YORK, NY: IEEE, US, vol. 2, 6 June 1999 (1999-06-06), pages 1202-1206, XP000898047 ISBN: 0-7803-5285-8**
• **TAROKH ET AL: "Space-time block codes from orthogonal designs" IEEE TRANSACTIONS ON INFORMATION THEORY, IEEE INC. NEW YORK, US, vol. 45, no. 5, July 1999 (1999-07), pages 1456-1467, XP002161393 ISSN: 0018-9448 cited in the application**
• **HUGHES B L: "A general approach to differential transmit diversity" SIGNALS, SYSTEMS, AND COMPUTERS, 1999. CONFERENCE RECORD OF THE THIRTY-THIRD ASILOMAR CONFERENCE ON OCT. 24-27, 1999, PISCATAWAY, NJ, USA, IEEE, US, 24 October 1999 (1999-10-24), pages 627-631, XP010374055 ISBN: 0-7803-5700-0**

## Description

Field of Invention

The present invention relates to the field of wireless communications, and in particular to a method of soft-output detection for differential transmit antenna diversity from orthogonal designs and a related soft output detector.

Background Art

For wireless communications transmit diversity techniques are a known technology to mitigate the detrimental effects of fading. One class of transmit diversity technique use so-called space-time codes. Space-time codes typically require knowledge of channel coefficients at the receiver side which knowledge may be obtained from transmission channel estimation.

However, transmission channel estimation is a significant problem in multiple input multiple output MIMO wireless communication systems as a plurality of sub-channels has to be estimated and the energy of pilot symbols. has to be distributed over a plurality of transmit antennas.

In view of the above, differential transmit diversity schemes being based on unitary space-time modulation schemes have been proposed in *B. Hochwald and W. Swelden: Differential Unitary Space-Time Modulation. IEEE Transactions on Communications, 48(12): 2041-2052, December 2000* and *B. L. Hughes: Differential Space-Time Modulation. IEEE Transactions on Information Theory, 46(7):2567-2578, November 2000*. However, for these proposals the actually transmitted symbols do not necessarily constitute an orthogonal design.

As another alternative, differential transmit diversity techniques reqiring no channel estimation and being based on so-called orthogonal designs have been proposed for two transmit antennas in *V. Tarokh and H. Jafarkhani: A differential Detection Scheme for Transmit Diversity. IEEE Journal on Selected Areas in Communications, 18(7): 1169-1174, July 2000* and further been generalized to more than two transmit antennas in *H. Jafarkhani and V. Tarokh: Multiple* Transmit *Antenna Differential Detection from Orthogonal Designs. IEEE Transactions on Information Theory, 47(6):2626-2631, September 2001*. Output detectors which have been proposed so far for this type of differential transmit diversity techniques deliver hard decisions on transmitted bits only.

Further, in WO 02/052773 A1, there is described a differential space-time block coder that produces successive space-time blocks of symbols from M-PSK symbols to be encoded, in accordance with an orthogonal matrix and a normalization factor. Differentially encoded space-time output blocks, for transmission via a plurality of transmit antennas of a wireless communications system, are produced by multiplying each space-time block from the space-time block coder by respective previous differentially encoded space-time output block.

Insofar as soft output detectors are available, they rely either on a knowledge of transmission channel characteristics at the receiver side or on a multiple symbol detection scheme, i.e. a large number of received transmission symbol blocks is considered leading to high complexity, delay, and degradation for time varying channels.

Summary of Invention

In view of the above, the object of the invention is to achieve soft output detection for differential transmit diversity techniques from orthogonal designs.

According to the present invention, this object is achieved through a method of non-coherent soft-output detection for differential transmit antenna diversity from orthogonal designs having the features of claim 1.

An important advantage of the present invention is that the transmation of an multiple input multiple output channel model into a single input single output channel model allows for an effective application of soft output decision mechanisms also for a differential transmit diversity scheme from orthogonal designs.

A further advantage of the present invention is that the delivery of soft output bit decisions using log likelihood ratios significantly improves the performance of successive detection stages, e.g., an error correction decoder, compared to hard output detectors as known in the art for differential space-time block codes. The availability of log likelihood ratios for soft output detection is based on certain properties of the differential transmit diversity scheme, i.e. related constellation points of the differential transmit diversity scheme onto which a set of input bits are mapped at the transmitter side have unit length.

Yet another advantage of the present invention is that the soft output detection is possible without any knowledge of the multiple input multiple output channel - i.e., without application of channel estimation techniques at the receiver side - and therefore with low complexity.

Yet another advantage of the present invention is the use of a very low number of received orthogonal designs for soft output detection, e.g., a number of two. Therefore, soft output detection is achieved with low complexity and low delay. Further, time varying multiple input multiple output transmission channels have practically no impact on the soft output detection performance.

According to another preferred embodiment of the present invention log-likelihood ratios for transmitted information bits are determined through use of max-log approximations of log-likelihood ratios.

This preferred embodiment of the present invention does not require any channel estimation but delivers soft output decisions which are scaled by an unknown factor, i.e. the variance of noise superimposed during transmission. Since this variance may be assumed to be constant over one frame - i.e., one block of an error correcting code - there exits no performance degradation, e.g., in an outer Viterbi type channel decoder. Further, this preferred embodiment of the present invention imposes no restriction on turbo feedback from the outer decoder and related additional performance improvements.

According to another preferred embodiment of the present invention - after tranformation of the multiple input multiple output channel into a single input single output channel - there is applied a single input single output channel estimation technique based on training symbols which are inserted to the differential transmit diversity scheme at the transmitter side.

Further to the above, where it has been stated that the present invention may be implemented without application of any channel estimation technique at all, this preferred embodiment of the present invention allows to generate additional information during the soft output decision process which may be of particular value for subsequent processing stages, e.g., channel decoding, equalization, or turbo feedback. As single input single output channel estimation has a significantly lower complexity than multiple input multiple output channel estimation it requires less training symbols and may also be performed using standard estimation techniques.

According to another preferred embodiment of the present invention it is proposed to derive an estimate of an effective single input single output channel coefficient as constant value, preferably as number of transmission antennas times the number of reception antennas.

A first advantage of this preferred embodiment of the present invention is that the use of training symbols for single input single output channel estimation and related processing overhead may be avoided. A second advantage is that this preferred embodiment of the present invention is particularly well suitable for a high diversity level, i.e. a high number of transmit and reception antennas.

According to another preferred embodiment of the present invention it is proposed to derive an estimate of an effective single input single output channel coefficient from decision variables generated as output values of the transformation from the multiple input multiple output channel representation to an equivalent single input single output channel representation, preferably as square root of a sum of squared absolute values of the decision variables. Preferably, the estimate may be further improved through averaging over a plurality of decision variables or through interpolation filtering of a plurality of decision variables.

The advantage of this preferred emobiment of the present invention is that it provides improved support for subsequent processing stages, e.g., channel decoding, equalization, or turbo feedback, at very low computational complexity through use of decision variables which are determined for soft output detection.

According to another preferred embodiment of the present invention there is provided a computer program product directly loadable into the internal memory of an soft output detector comprising software code portions for performing the inventive method of soft-output detection when the product is run on a processor of the soft output detector.

Therefore, the present invention is also provided to achieve an implementation of the inventive method steps on computer or processor systems. In conclusion, such implementation leads to the provision of computer program products for use with a computer system or more specifically a processor comprised, e.g., in a soft output detector.

The programs defining the function of the present invention can be delivered to a computer/processor in many forms, including, but not limited to information permanently stored on non-writeable storage media, e.g., read only memory devices such as ROM or CD ROM discs readable by processors or computer I/O attachments; information stored on writable storage media, i.e. floppy discs and hard drives; or information convey to a computer/processor through communication media such as local area network and/or telephone networks and/or Internet or other interface devices. It should be understood, that such media when carrying processor readable instructions implementing the inventive concept represent alternate embodiments of the present invention.

Description of Drawing

In the following the best mode and preferred embodiments of the present invention will be explained with reference to the drawing in which:

Fig. 1 shows a schematic diagram of a flat fading multiple input multiple output channel model;

Fig. 2 shows a schematic diagram of an encoder for a differential transmit diversity scheme from orthogonal designs using a differential space-time block code;

Fig. 3 shows a schematic diagram of the soft output detector according to the present invention;

Fig. 4 shows a flowchart of operation for the soft output detector shown in Fig. 3;

Fig. 5 shows a more detailed schematic diagram of transformation unit shown in Fig. 3;

Fig. 6 shows a flowchart of operation for the transformation unit shown in Fig. 5;

Fig. 7 shows a schematic diagram of single input single output channel model after transformation of the multiple input multiple output channel model;

Fig. 8 shows a schematic diagram of a soft demapping unit shown in Fig. 3 and Fig. 5; and

Fig. 9 shows a flowchart of control of the soft demapping unit shown in Fig. 8.

Description of Best Mode and Preferred Embodiments

In the following, the best mode and preferred embodiments of the present invention will be explained with reference to the drawing. Initially, some basic concepts underlying soft output detection will be explained for a better understanding of the present invention.

*Channel Model*

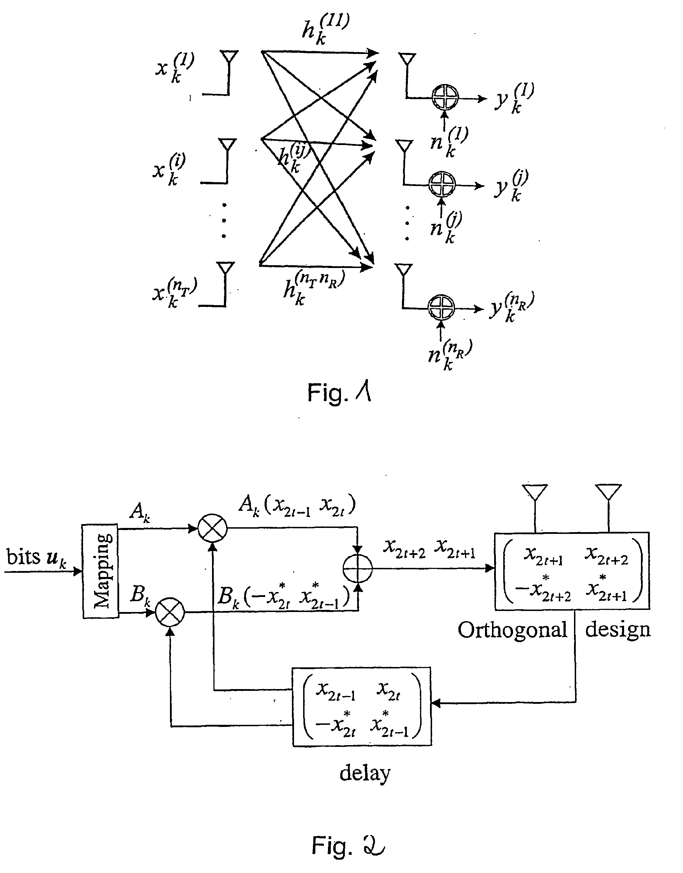

Fig. 1 shows a schematic diagram of a flat fading multiple input multiple output channel model according to the present invention.

As shown in Fig. 1, a flat fading multiple-input-multiple-output (MIMO) channel describes a system with $n_T$ transmit antennas and $n_R$ receive antennas. The tap gain from transmit antenna i to receive antenna j at time k is denoted by $h_k^{(ij)}$. Further, the symbol transmitted from antenna *i* at time *k* is denoted by $x_k^{(i)}$. The observed value at receive antenna *j* at time *k* is given by

$$y_k^{(j)} = \sum_{i=1}^{n_T} h_k^{(ij)} x_k^{(i)} + n_k^{(j)},$$

where $n_k^{(j)}$ is the additive noise at receive antenna *j*.

It should be noted, that Fig. 1 shows a frequency flat multitple input multiple output channel for the explanation of the transmit diversity schemes in the following. However, the different embodiments of the present invention to be explained in the following are also appplicable to frequency-selective multiple input multiple output channels which are decomposed into a set of flat fading channels using appropriate techniques, e.g., using orthogonal frequency division multiple access and a guard interval.

*Principle of Differential Space-Time Block Codes from Orthogonal Designs*

Further to the explanation of the channel model given above, in the following principles of differential space-time block codes from orthogonal designs will be explained.

The basis for differential space-time block codes from orthogonal designs are non-differential transmit diversity techniques using orthogonal designs, e.g., as proposed for two transmit antennas in *S. Alamouti: A Simple Transmitter Diversity Technique for Wireless Communications. IEEE Journal on Selected Areas of Communications, Special Issue on Signal Processing for Wireless Communications, 16(8):1451-1458, 1998,* incorporated herein by reference, and further generalized to more than two transmit antennas in *V. Tarokh, H. Jafarkhani, and A.R. Calderbank: Space-Time Block Codes From Orthogonal Designs. IEEE Transactions on Information Theory, 45(5):1456-1467, June 1999,* also incorporate herein by reference.

Irrespective of the type of transmit diversity, during data transmission a source of information will generate a sequence of input bits to a modulator which will map different input bits onto different constellation points of a pre-determined modulation scheme, e.g., a 8-phase shift keying modulation scheme. For non-differential type transmit diversity, the generated constellation points will form the basis for set up of a so-called orthogonal design that may be represented by a matrix according to

$$\mathbf{B} = \begin{bmatrix} b_{11} & \cdots & b_{1n_T} \\ \vdots & & \vdots \\ b_{P1} & \cdots & b_{Pn_T} \end{bmatrix}.$$

Here, the number of columns $n_T$ in the orthogonal design corresponds to the number of transmit antennas and the number of rows $P$ corresponds to the number of time slots used for transmission. As already outlined above, the elements of the orthogonal design are elements of a modulation constellation scheme, complex conjugates of these elements and linear combinations thereof.

Space-time block coding therefore means to setup entries of the orthogonal design from a pre-determined number of constellation points of the modulation constellation scheme. All entries in the same row of the orthogonal design are transmitted simultaneously from a corresponding number of transmit antennas. Further, entries in the same column of the orthogonal design are transmitted from the same transmit antenna in successive time slots. Therefore, columns of the orthogonal design represent time while rows of the orthogonal design represent space. Due to the orthogonality of the orthogonal design, at the receiver side a simple linear combination allows for reception diversity.

In view of the above, differential transmit diversity techniques based on orthogonal designs have been proposed for two transmit antennas in *V. Tarokh and H. Jafarkhani: A differential Detection Scheme for Transmit Diversity. IEEE Journal on Selected Areas in Communications, 18(7):1169-1174, July 2000,* incorporated herein by reference, and further been generalized to more than two transmit antennas in *H. Jafarkhani and V. Tarokh: Multiple Transmit Antenna Differential Detection from Orthogonal Designs. IEEE Transactions on Information Theory, 47(6):2626-2631, September 2001,* also incorporated herein by reference.

Fig. 2 shows a schematic diagram of an encoder for a differential transmit diversity scheme from orthogonal designs using a differential space-time block code for $n_T = 2$ transmit antennas.

As shown in Fig. 2, differential transmit diversity relies on a mapping of bits $u_k = (u_{k,1}, ..., u_{k,2.\log_2(M)})$ which are transmitted within the same orthogonal design - also referred to as code matrix in the following - to complex constellation points $A_k$ and $B_k$. The vector $(x_{2t+2}\ x_{2t+1})$ which is transmitted in a time slot has unit length according to

$$|x_{2t+2}|^2 + |x_{2t+1}|^2 = 1. \tag{1}$$

It should be noted, that this requirement is introduced for reasons of differential detection at the receiver side. The mapping of bits onto constellation points may be achieved starting from an *M - ary* phase shift keying *PSK* constellation with constellation points

$$d_k = \frac{1}{\sqrt{2}}\, e^{j2\pi n/M + \varphi_0},\ n = 0, 1, ..., M - 1 \tag{2}$$

and through application of

$$A_k = d_{2t+1}d(0)^* + d_{2t+2}d(0)^*$$

$$B_k = -d_{2t+1}d(0) + d_{2t+2}d(0). \tag{3}$$

The reference symbol $d(0)$ may be chosen randomly from the *M-aryPSK* constellation. As $\log_2(M)$ bits are mapped on each of the *PSK* constellation points $d_{2t+1}$ and $d_{2t+2}$ according to an arbitrary mapping, e.g., a Gray mapping, the constellation points $A_k$ and $B_k$ are determined by $2 \cdot \log_2(M)$ bits. An important property of the mapping is that the vector $[A_k, B_k]$ has unit length:

$$|A_k|^2 + |B_k|^2 = 1. \qquad (4)$$

For differential transmit diversity a reference space-time block code matrix or equivalently a reference orthogonal design is transmitted first, e.g., according to

$$\mathbf{B} = \begin{bmatrix} x_1 & x_2 \\ -x_2^* & x_1^* \end{bmatrix} \qquad (5)$$

for an orthogonal design provided for two transmit antennas and a transmission over two time slots. The reference orthogonal design contains arbitrary symbols $x_1$ and $x_2$ taken from the *M - ary PSK* constellation, so that for the coding of the first bits a reference to a previous matrix, i.e. the reference code matrix is possible.

The following symbols for the space-time block code mapper which carry information are obtained from

$$(x_{2t+1}, x_{2t+2}) = A_k (x_{2t-1}, x_{2t}) + B_k (-x_{2t}^*, x_{2t-1}^*). \qquad (6)$$

In view of the above, orthogonal designs are transmitted over the multiple input multiple output channel which allows to separate the transmission symbols transmitted simultaneously from different antennas by simple combining at the receiver side.

*Soft Output Detection for Differential Transmit Antenna Diversity from Orthogonal Designs*

*Basic Structure and Operation of Soft Output Detector*

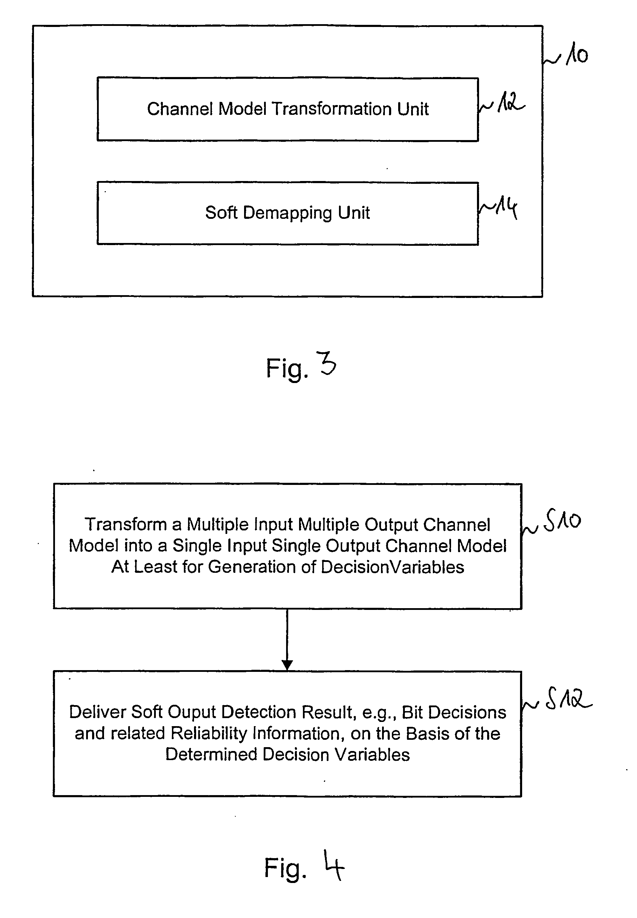

In the following, soft output detection for differential transmit antenna diversity from orthogonal design will be explained with reference to Fig. 3 to 9.

Heretofore, Fig. 3 shows a schematic diagram of a soft-output detector 10 for differential transmit antenna diversity from orthogonal designs according to the present invention. The soft output detector 10 of the present invention is of the non-coherent type, i.e. an application of channel estimation techniques is not a prerequisite for the operation thereof.

As shown in Fig. 3, the soft output detector 10 according to the present invention comprises a channel model transformation unit 12 and a soft demapping unit 14.

Fig. 4 shows a flowchart of operation for the soft output decoder shown in Fig. 3.

As shown in Fig. 4, operatively the transformation unit 12 is adapted to transform a multiple input multiple output channel into equivalent single input single output channels for determination of decision variables in a step S10. The transformation of the multiple input multiple output channel model into a single input single output channel model is the basis for an effective application of soft output detection mechanisms also for a differential transmit diversity scheme from orthogonal designs.

As shown in Fig. 4, operatively the soft demapping unit 14 is adapted to determine log-likelihood ratios for transmitted information bits on the basis of the determined decision variables for delivery of soft-output bit decisions with reliability information in a step S12. Here, it should be noted that the delivery of soft output decision does not require the application of channel estimation techniques per se, although this is as well covered within the overall framework of the present invention as will be explained in more detail in the following.

Further, the delivery of soft output bit decisions using log likelihood ratios through the soft demapping unit 14 significantly improves the performance of successive detection stages, e.g., an error correction decoder, compared to hard output detectors as known in the art for space-time block codes. The availability of log likelihood ratios for soft output detection is based on certain properties of the differential transmit diversity scheme, i.e. that related constellation points of the differential transmit diversity scheme onto which a set of input bits are mapped at the transmitter side have unit length.

*Structure and Operation of Transformation Unit*

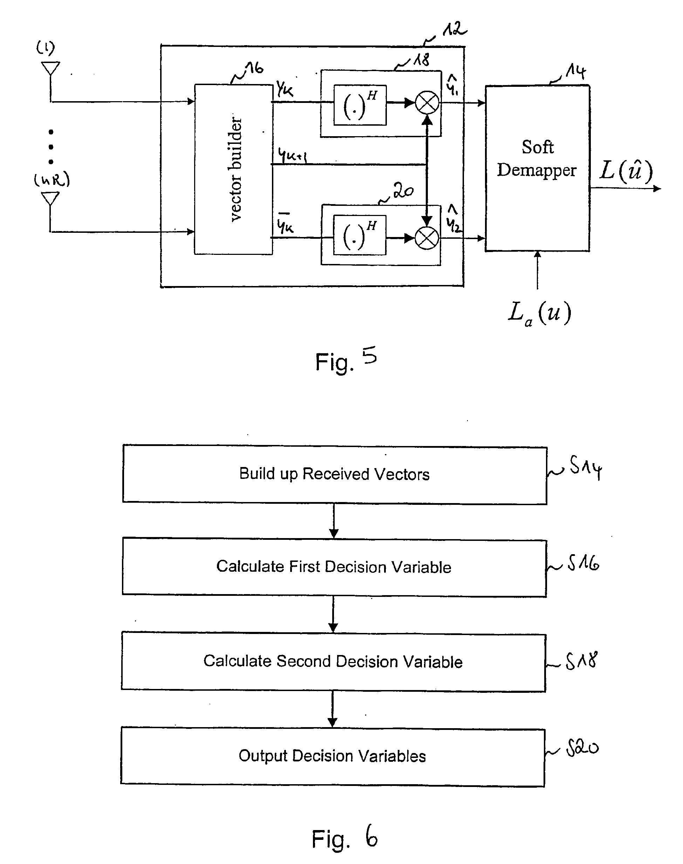

While above, the basic structure of the non-coherent soft output detector 10 according to the present invention has been explained with reference to Fig. 3 and 4, in the following further details of the transformation unit 12 shown in Fig. 3 will be explained with referenece to Fig. 5 to 7.

Fig. 5 shows a schematic diagram of transformation unit 12 shown in Fig. 3.

As shown in Fig. 5, the transformation unit 12 comprises a vector builder 16, a first decision variable calculation unit 18, and a second decision variable calculation unit 20. The input terminals of the vector builder 16 are connected to reception antennas. The output terminals of the vector builder 16 are connected to the first decision variable calculation unit 18 and the second decision variable calculation unit 20. The output terminals of the first decision variable calculation unit 18 and a second decision variable calculation unit 20, respectively, are connected with the input terminals of the soft demapping unit 14.

Fig. 6 shows a flowchart of operation for the transformation unit shown in Fig. 5.

As shown in Fig. 6, operatively the vector builder 16 will receive transmission symbols from the reception antennas - i.e. $y_{2t-1}^{(1)}, \ldots y_{2t+2}^{(1)}$ from the first reception antenna, ..., $y_{2t-1}^{(n_R)}, \ldots y_{2t+2}^{(n_R)}$ from the $n_R$-th reception antenna - to build up received vectors $y_k$, $y_{k+1}$, and $\bar{y}_k$, repectively, in a step $S14$. The vectors $y_k$ and $y_{k+1}$ are forwarded to the first decision variable calculation unit 18 for calculation of a first decision variable $\hat{y}_1$ in a step $S16$. Further, the vectors $y_{k+1}$ and $\bar{y}_k$ are forwarded to the second decision variable calculation unit 18 for calculation of a second decision variable $\hat{y}_2$ in a step $S18$. The first decision variable $\hat{y}_1$ and the second decision variable $\hat{y}_2$ are finally output in a step $S20$ to the soft demapping unit 14 for subsequent processing thereof. While Fig. 6 shows a sequential execution of step S16 and step S18, according to the present invention step S16 and step S18 may also be executed in parallel.

In view of the above, it should be noted that the transformation unit 12 as shown in Fig. 5 considers the received values of only two successive orthogonal designs $k$ and $k - 1$ carrying the transmit symbols $x_{2t-1}$, $x_{2t}$, $x_{2t+1}$, $x_{2t+2}$ and their conjugates, respectively, leading to low complexity and low delay in processing.

As will be shown in the following, the transformation of the multiple input multiple output channel model into a single input single output representation is achieved in the transformation unit 12 on the basis of a linear representation of the multiple input multiple output channel. This linear representation form the basis for the calculation of the decision variables $\hat{y}_1$ and $\hat{y}_2$. In particular, the received vectors $y_k$, $y_{k+1}$, and $\bar{y}_k$ build up in the vector builder 16 are defined according to

$$
\mathbf{y}_k = \begin{bmatrix} y_{2t-1}^{(1)} \\ y_{2t}^{(1)*} \\ \vdots \\ y_{2t-1}^{(n_R)} \\ y_{2t}^{(n_R)*} \end{bmatrix}, \qquad \mathbf{y}_{k+1} = \begin{bmatrix} y_{2t+1}^{(1)} \\ y_{2t+2}^{(1)*} \\ \vdots \\ y_{2t+1}^{(n_R)} \\ y_{2t+2}^{(n_R)*} \end{bmatrix}, \qquad \bar{\mathbf{y}}_k = \begin{bmatrix} y_{2t}^{(1)} \\ -y_{2t-1}^{(1)*} \\ \vdots \\ y_{2t}^{(n_R)} \\ -y_{2t-1}^{(n_R)*} \end{bmatrix}, \qquad (7)
$$

wherein

$t$ is a time index;

$n_R$ is the number of reception antennas;

* is a complex conjugate operator; and

$y_i^{(j)}$ is a symbol received at time $i$ at reception antenna $j$.

Considering the principles of differential space-time block codes as outlined above, these received vectors are related to the following transmit symbol vectors:

$$
\mathbf{x}_k = \begin{bmatrix} x_{2t-1} \\ x_{2t} \end{bmatrix}, \qquad \mathbf{x}_{k+1} = \begin{bmatrix} x_{2t+1} \\ x_{2t+2} \end{bmatrix}, \qquad \bar{\mathbf{x}}_k = \begin{bmatrix} -x_{2t}^* \\ x_{2t-1}^* \end{bmatrix}, \qquad (8)
$$

Further, the noise superimposed during transmission of the transmit symbol vectors may be represented through noise vectors according to

$$\mathbf{n}_k = \begin{bmatrix} n_{2t-1}^{(1)} \\ n_{2t}^{(1)*} \\ \vdots \\ n_{2t-1}^{(n_R)} \\ n_{2t}^{(n_R)*} \end{bmatrix}, \qquad \mathbf{n}_{k+1} = \begin{bmatrix} n_{2t+1}^{(1)} \\ n_{2t+2}^{(1)*} \\ \vdots \\ n_{2t+1}^{(n_R)} \\ n_{2t+2}^{(n_R)*} \end{bmatrix}, \qquad \bar{\mathbf{n}}_k = \begin{bmatrix} n_{2t}^{(1)} \\ -n_{2t-1}^{(1)*} \\ \vdots \\ n_{2t}^{(n_R)} \\ -n_{2t-1}^{(n_R)*} \end{bmatrix}, \qquad (9)$$

Assuming that the linear system describing the behaviour of the multiple input multiple output transmission channel is represented by a matrix H

$$\tilde{\mathbf{H}} = \begin{bmatrix} h^{(11)} & h^{(21)} \\ h^{(21)*} & -h^{(11)*} \\ \vdots & \vdots \\ h^{(1n_R)} & h^{(2n_R)} \\ h^{(2n_R)*} & -h^{(1n_R)*} \end{bmatrix}, \qquad (10)$$

the received vectors $y_k$, $y_{k+1}$, and $\bar{y}_k$ may represented according to

$$\mathbf{y}_k = \tilde{\mathbf{H}}\mathbf{x}_k + \mathbf{n}_k, \qquad (11)$$

$$\mathbf{y}_{k+1} = \tilde{\mathbf{H}}\mathbf{x}_{k+1} + \mathbf{n}_{k+1}, \qquad (12)$$

$$\bar{\mathbf{y}}_k = \bar{\mathbf{H}}\bar{\mathbf{x}}_k + \bar{\mathbf{n}}_k. \qquad (13)$$

From (11) and (12) the first decision variable calculation unit 18 calculates the first decision variable $\hat{y}_1$ according to

$$\begin{aligned} \hat{y}_1 &= \mathbf{y}_k^H \mathbf{y}_{k+1} = \\ &= \mathbf{x}_k^H \tilde{\mathbf{H}}^H \tilde{\mathbf{H}} \mathbf{x}_{k+1} + \mathbf{x}_k^H \tilde{\mathbf{H}}^H \mathbf{n}_{k+1} + \mathbf{n}_k^H \tilde{\mathbf{H}} \mathbf{x}_{k+1} + \mathbf{n}_k^H \mathbf{n}_{k+1} \\ &= A_k \left( \sum_{i=1}^{n_T} \sum_{j=1}^{n_R} |h^{(ij)}|^2 \right) + \text{noise}. \end{aligned} \qquad (14)$$

wherein $H$ is operator of transposing a vector and applying the conjugate complex operator * to all vector elements.
From (12) and (13) the second decision variable calculation unit 20 calculates the second decision variable $\hat{y}_2$ according to

$$\begin{aligned} \hat{y}_2 &= \bar{\mathbf{y}}_k^H \mathbf{y}_{k+1} = \\ &= \bar{\mathbf{x}}_k^H \bar{\mathbf{H}}^H \tilde{\mathbf{H}} \mathbf{x}_{k+1} + \bar{\mathbf{x}}_k^H \bar{\mathbf{H}}^H \mathbf{n}_{k+1} + \bar{\mathbf{n}}_k^H \tilde{\mathbf{H}} \mathbf{x}_{k+1} + \bar{\mathbf{n}}_k^H \mathbf{n}_{k+1} \\ &= B_k \left( \sum_{i=1}^{n_T} \sum_{j=1}^{n_R} |h^{(ij)}|^2 \right) + \text{noise}. \end{aligned} \qquad (15)$$

It should be noted, that the resulting noise variance in equation (14) and (15) is

$$\sigma_{\hat{y}1}^2 = \sigma_{\hat{y}2}^2 = 2\sigma^2 \sum_{i=1}^{n_T} \sum_{j=1}^{n_R} \left| h^{(ij)} \right|^2, \qquad (16)$$

where $\sigma^2$ is the variance per real dimension of the noise at each receive antenna.

A hard decision would be the closest constellation point $[A(i), B(i)]$ to $[\hat{y}_1, \hat{y}_2]$ which is obtained from

$$(\hat{A}_k, \hat{B}_k) = \arg\min_i \left\{ |\hat{y}_1 - A(i)|^2 + |\hat{y}_2 - B(i)|^2 \right\} \qquad (17)$$

and the realted bits $u_k$ would be obtained by demapping from $A_k$ and $B_k$. However, in a wireless communication system the differential space-time block code is concatenated with an outer forward error correction code. This is one of the reasons that the present invention provides for a soft output detector rather than using hard decisions.

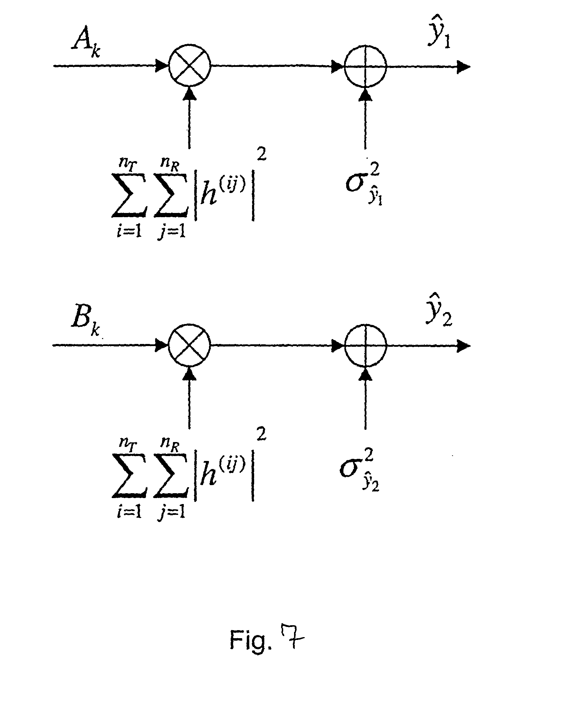

Fig. 7 shows a schematic diagram of single input single output channel model after transformation of the multiple input multiple output channel model forming the basis for such a soft output detection after calculation of the decision variables $\hat{y}_1$ and $\hat{y}_2$. As shown in Fig. 7, the operations as outlined above has transformed the multiple input multiple output transmission channel into two equivalent single input single output transmission channels.

*Structure and Operation of Soft Demapping Unit*

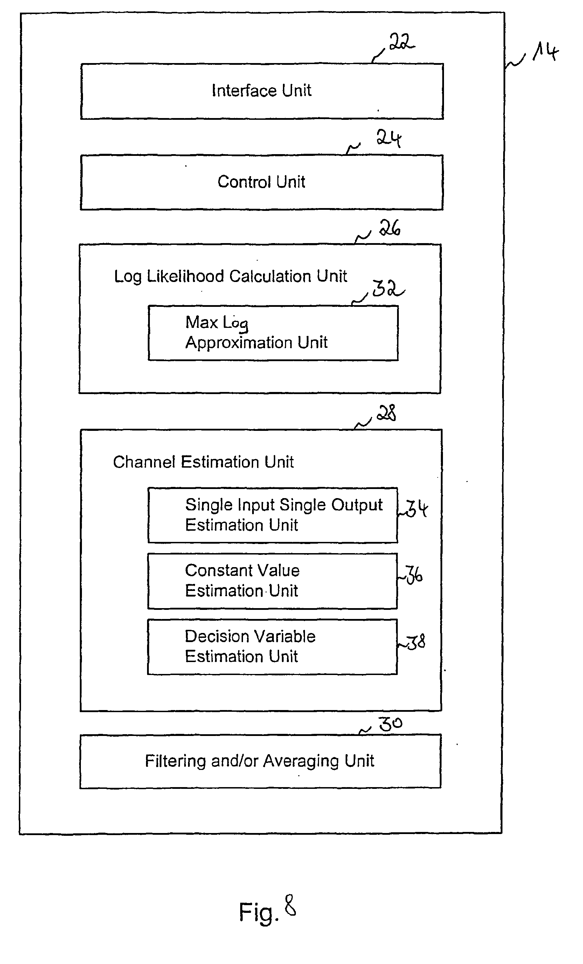

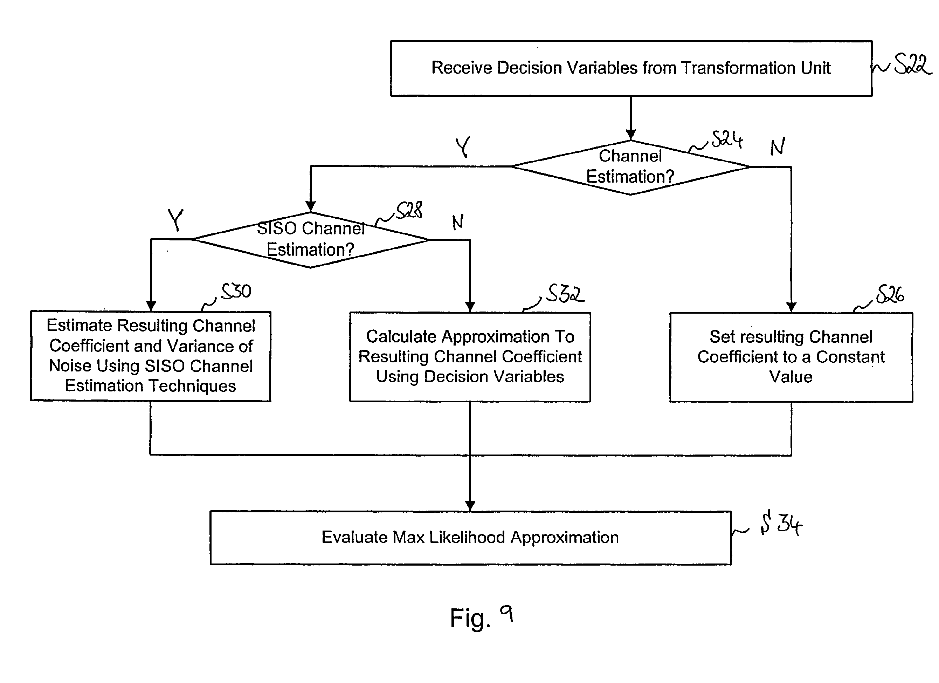

While above a way of calculating the decision variables $\hat{y}_1$ and $\hat{y}_2$ has been explained, still the variance of noise and the double sum over all tap gains are not directly available at the soft demapping unit 14. In following different embodiments of the present invention provided to tackle this situation will be discribed with reference to Fig. 8 and 9.

Fig. 8 shows a schematic diagram of a soft demapping unit shown in Fig. 3 and Fig. 5.

As shown in Fig. 8, the soft dempping unit 14 comprises an interface unit 22, a control unit 24, a log likelihood calculation unit 26, an channel estimation unit 28, and a filter and/or averaging unit 30.

As also shown in Fig. 8, according to preferred embodiment of the present invention the log likelihood calculation unit comprises a max log approximation unit 32, and the channel estimation unit 28 comprises different sub-units adapted to specific forms of channel estimation - which estimation is optional as already outlined above - i.e., a single input single output estimation unit 34, a constant value estimation unit 36, and a decision variable estimation unit 38.

Before explaining details of operations of the soft demapping unit shown in Fig. 8, initially, a theoretical background of operation will be given in the following.

Using (4) and (16) given above, operatively the log likelihood calculation unit 26 determines an a posteriori probability log-likelihood according to

$$L(\hat{u}_{k,l}) = \log \frac{p(u_{k,l} = +1 | \hat{y}_1, \hat{y}_2)}{p(u_{k,l} = -1 | \hat{y}_1, \hat{y}_2)} \qquad (18)$$

wherein

$k$ is a time index;

a vector of transmission bits $u_k$ of dimension $2log_2(M)$ is mapped onto one of the $M^2$ constellation elements of the differential transmit diversity scheme and $u_{k,l}$ is a transmission bit at position $l$ in $u_k$;

$\hat{y}_1$ is the first determined decision variable;

$\hat{y}_2$ is the second determined decision variable;

$p(u_{k,l} = +1 | \hat{y}_1, \hat{y}_2)$ is a first conditional probablity for $u_{k,l} = +1$ in view of determined decision variables $\hat{y}_1$ and $\hat{y}_2$;

$p(u_{k,l} = -1 | \hat{y}_1, \hat{y}_2)$ is a second conditional probablity for $u_{k,l} = -1$ in view of determined decision variables $\hat{y}_1$ and $\hat{y}_2$; and

$L(\hat{u}_{k,l})$ is the soft output.

Further, operatively the log likelihood calculation unit 26 determines a bit-wise output bit decision according to

$$\hat{u}_{k,l} = sign(L(\hat{u}_{k,l}))$$

and a bit-wise reliabilty information is determined according to

$$|L(\hat{u}_{k,l})|.$$

Accoording to a preferred embodiment of the present invention the log likelihood calculation unit 26 comprises a max log approaximation unit 32 for efficient determination of the soft output decision outlined so far. The basis of operation of this max log approximation unit 32 will be explained in the following.

A first step towards approximation of log likelihood ratios is a reformulation of (18) according to

$$L(\hat{u}_{k,l}) = log\frac{p(u_{k,l}=+1|\hat{y}_1,\hat{y}_2)}{p(u_{k,l}=-1|\hat{y}_1,\hat{y}_2)} =$$

$$= log\frac{\sum_{\substack{(A(i),B(i)) \\ u_{k,l(i)}=+1}} p(\hat{y}_1,\hat{y}_2|A(i),B(i)\prod_l P_a(u_{k,l}(i)))}{\sum_{\substack{(A(i),B(i)) \\ u_{k,l(i)}=-1}} p(\hat{y}_1,\hat{y}_2|A(i),B(i)\prod_l P_a(u_{k,l}(i)))}$$

$$= log\frac{\sum_{\substack{(A(i),B(i)) \\ u_{k,l(i)}=+1}} e^{\frac{1}{2\sigma_{\hat{y}_1}^2}\sum_{i=1}^{n_T}\sum_{j=1}^{n_R}|h^{(ij)}|^2\left\{Re\left\{A(i)\hat{y}_1^*\right\}+Re\left\{B(i)\hat{y}_2^*\right\}\right\}+\frac{1}{2}u(i)^T L_a(u)}}{\sum_{\substack{(A(i),B(i)) \\ u_{k,l(i)}=-1}} e^{\frac{1}{2\sigma_{\hat{y}_1}^2}\sum_{i=1}^{n_T}\sum_{j=1}^{n_R}|h^{(ij)}|^2\left\{Re\left\{A(i)\hat{y}_1^*\right\}+Re\left\{B(i)\hat{y}_2^*\right\}\right\}+\frac{1}{2}u(i)^T L_a(u)}}$$

$$(19)$$

wherein

[A(i), B(i)] is a vector of related constellation points of the differential transmit diversity scheme with $i \in \{1,...,M\}$;

$P_a(u_{k,l})$ is an a priori probability of bit $u_{k,l}$;

the sum in the nominator is taken over all constellation points [A(i), B(i)] associated with $u_{k,l}$ = +1

the sum in the denominator is taken over all constellation points [A(i), B(i)] associated with $u_{k,l}$ = -1

$\sigma_{\hat{y}_1}^2$ s determined according to equation (16);

* is complex conjugate operator;

Re is a real part operator;

u(i) is a vector candidate for decision on transmission bits $u_{k,l}$;

T is a transpose operator; and

$L_a$ is a vector of a priori log-likelihoods corresponding to the vector representation of transmission bits which may be known, e.g., from information source statistics or through turbo feedback.

Equation (19) can be evaluated using the Jacobian logarithm according to

$$\ln\left[e^{\delta_1}+e^{\delta_2}\right] = max\{\delta_1,\delta_2\} + f_c(|\delta_1-\delta_2|) \qquad (20)$$

where

$$f_c(|\delta_1-\delta_2|) = \ln(1+e^{|\delta_1-\delta_2|}) \qquad (21)$$

is a correction term which may be implemented, e.g., using a look-up table technique. The max-likelihood approximation of (19according to the present invention may now be determined by neglecting the correction term $f_c$ in (20) according to:

$$L(\hat{u}_{k,l}) \approx$$

$$max_{\substack{(A(i),B(i)) \\ u_{k,l}(i)=+1}} \left\{ \frac{1}{2\sigma_{\tilde{y}_1}^2} \sum_{i=1}^{n_T} \sum_{j=1}^{n_R} \left| h^{(i,j)} \right|^2 \left[ Re\left\{ A(i)\hat{y}_1^* \right\} + Re\left\{ B(i)\hat{y}_2^* \right\} \right] + \frac{1}{2}\mathbf{u}(i)^T \mathbf{L_a(u)} \right\} -$$

$$max_{\substack{(A(i),B(i)) \\ u_{k,l}(i)=-1}} \left\{ \frac{1}{2\sigma_{\tilde{y}_1}^2} \sum_{i=1}^{n_T} \sum_{j=1}^{n_R} \left| h^{(i,j)} \right|^2 \left[ Re\left\{ A(i)\hat{y}_1^* \right\} + Re\left\{ B(i)\hat{y}_2^* \right\} \right] + \frac{1}{2}\mathbf{u}(i)^T \mathbf{L_a(u)} \right\}$$

$$(22)$$

wherein
the first *max* operator is applied to all constellations points [$A(i)$, $B(i)$] of the differential transmit diversity scheme and related transmission bits $u_{k,l}(i)$ having a value of +1;
the second *max* operator is applied to all constellations points [$A(i)$, $B(i)$] of the differential transmit diversity scheme and related transmission bits $u_{k,l}(i)$ having a value of -1;
$n_T$ is the number of transmit antennas used to achieve transmit diversity;
$n_R$ is the number of reception antennas used to achieve diversity reception; and
$h^{(i,j)}$ is a gain from transmit antenna $i$ to reception antenna $j$ at time $k$.

It should be noted that variance of noise $\sigma_{\tilde{y}_1}^2$ and the double sum over all tap gains $\sum_{i=1}^{n_T} \sum_{j=1}^{n_R} \left| h^{(i,j)} \right|^2$ in (22) are not directly provided through the transformation unit 12 shown in Fig. 3 and 5. In the following different preferred embodiments of the present invention for evaluation of (22) will be explained.

*First Mode of Evaluating Max-Log Approximation*

A first mode of evaluating the max-log approximation (22) - operatively achieved by the single input single output estimation unit 34 shown in Fig. 8 - is to use single input single output standard estimation techniques for estimation of $\sigma_{\tilde{y}_1}^2$ and $\sum_{i=1}^{n_T} \sum_{j=1}^{n_R} \left| h^{(i,j)} \right|^2$. This requires insertion of training symbols $A_k$, $B_k$ into the differential transmit diversity scheme before differential encoding. Typical examples of standard estimation techniques - which are to be considered as non-binding for the scop of the present invention - are minimum mean squared error MMSE channel estimation or correlative channel estimation with training sequence.

It should be noted that the transformation of the multiple input multiple output channel model into the single input single output channel model reduces the problem of multiple input multiple output channel estimation to single input single output channel estimation where standard estimation techniques can be applied. As single input single output channel estimation has a significantly lower complexity than multiple input multiple output channel estimation it requires less training symbols and may also be performed using standard estimation techniques. Further, the generated information may be of particular value for subsequent processing stages, e.g., channel decoding, equalization, or turbo feedback.

*Second Mode of Evaluating Max-Log Approximation*

A second mode of evaluating the max-log approximation (22)- operratively achieved by the constant value estimation unit 36 shown in Fig. 8 - is to set values of $\sigma_{\tilde{y}_1}^2$ and $\sum_{i=1}^{n_T} \sum_{j=1}^{n_R} \left| h^{(i,j)} \right|^2$ to any constant value. Preferably a product of $\sigma_{\tilde{y}_1}^2 \cdot \sum_{i=1}^{n_T} \sum_{j=1}^{n_R} \left| h^{(i,j)} \right|^2$ of both terms is set to $n_T \cdot n_R$.

For this mode of evaluation it is assumed that the variance is constant over one frame or equivalently one orthogonal design of the differential transmit diversity scheme. Further, this mode of evaluation is particularily well suited for a high diversity level, i.e. a high number of transmit and reception antennas.
With the second mode of evaluating the max-log approximation the soft output detection is achieved without any channel estimation at all. The insight underlying this approach is that the requirement, e.g., for noise estimation in order to compute soft output decisions depends on the algorithm used in the outer forward error correction (FEC) decoder. E.g., if a Viterbi type decoder is applied it is not necessary to estimate noise variance as the related value is only a constant factor in all likelihood ratio values forwarded to the decoder. Therefore, the related constant factor may be set to any constant value.

Further, in a turbo decoder scheme no degradation will occur as long as only Max-Log MAP components are applied and no a priori information being gained outside the turbo scheme is used, as explained in *G. Bauch and V. Franz: A comparison of Soft-In/Soft-Out Algorithms for "'Turbo Detection'": International Conference on Telecommunications (ICT), June 1998,* incorporated here by reference.

*Third Mode of Evaluating Max-Log Approximation*

A third mode of evaluating the max-log approximation (22) - operratively achieved by the decision variable estimation unit 38 shown in Fig. 8 - is to set values of $\sigma_{\hat{y}_1}^2$ and $\sum_{i=1}^{n_T} \sum_{j=1}^{n_R} \left| h^{(i,j)} \right|^2$ to an estimate of an effective single input single output channel coefficient calculated from decision variables.

Here, it is assumed that in addition to the soft output detection values specified above, the soft demapping unit 14 may also compute an estimate of a resulting channel coefficient $h_e$. In particular, a resulting channel coefficient may be obtained using (14). (15), and (4) from

$$h_e = \sqrt{|\hat{y}_1|^2 + |\hat{y}_2|^2} =$$

$$\left( \sum_{i=1}^{n_T} \sum_{j=1}^{n_R} \left| h^{(i,j)} \right|^2 \right)^2 \left( |A_k|^2 + |B_k|^2 \right)$$

$$+ A_k n_{\hat{y}_1}^* \sum_{i=1}^{n_T} \sum_{j=1}^{n_R} \left| h^{(i,j)} \right|^2 + A_k^* n_{\hat{y}_1} \sum_{i=1}^{n_T} \sum_{j=1}^{n_R} \left| h^{(i,j)} \right|^2 + n_{\hat{y}_1} \hat{y}_1^*$$

$$+ B_k n_{\hat{y}_2}^* \sum_{i=1}^{n_T} \sum_{j=1}^{n_R} \left| h^{(i,j)} \right|^2 + B_k^* n_{\hat{y}_2} \sum_{i=1}^{n_T} \sum_{j=1}^{n_R} \left| h^{(i,j)} \right|^2 + n_{\hat{y}_2} \hat{y}_2^*$$

$$(23)$$

Neglecting the noise components in (23) it is possible to replace $\sum_{i=1}^{n_T} \sum_{j=1}^{n_R} \left| h^{(i,j)} \right|^2$ by

$$h_e = \sqrt{|\hat{y}_1|^2 + |\hat{y}_2|^2} \qquad (24)$$

which may then be used as resulting channel coefficient.

Further to the above, irrespective of the mode of evaluating the max-log approximation term, the filtering and/or averaging unit 30 as shown in Fig. 8 may improve the resulting channel coefficient through interpolation filtering of a plurality of decision variables of different block matrices in the differential transmit diversity scheme or through averaging over a plurality of decision variables.

*Control of Soft Demapping Unit*

While above different structural components and related functionalities of the soft demapping unit 14 have been explained with reference to Fig. 8, in the following the control of these structural components through the control unit 24 shown in Fig. 8 will be explained with reference to Fig. 9.

As shown in Fig. 9, initially the control unit 24 will coordinate the exchange of data from the transformation unit 12 for receipt of decision variables in a step *S22*. Then, in a step *S24* the control unit 24 will decide on the mode of evaluation of the log likelihood calculation in a step *S24*, i.e., whether a channel estimation should be carrried out or not.

As shown in Fig. 9, when no channel estimation is to be carried out, the control unit will activate the constant value estimation unit 36 in a step *S*26. Otherwise, the control unit 24 will decide on the type of channel estimation in a step *S*28. Further, when a single input single output channel estimation is required, the control unit 24 will activate the single input single output estimation unit in a step *S*30. Otherwise, the control unit 24 will activate the decision variable estimation unit 38 in a step *S*32.

As shown in Fig. 9, finally the control unit 24 will activate the log likelihood calculation unit 26 or the max log approximation unit 32 in compliance with the input information provided to the soft demapping unit 14 and information generated internally through the channel estimation unit 28. Although not shown in Fgi. 9, the control unit 24 may as well activate the filtering and/or averaging unit 30 for further improvement of the soft output detection result in the sense outlined above.

**Claims**

**1.** Method of non-coherent soft-output detection for differential transmit antenna diversity from orthogonal designs, comprising the steps:

transforming a multiple input multiple output channel into equivalent single input single output channels using a differential transmit diversity scheme for determination of decision variables $(\hat{y}_1, \hat{y}_2)$; and
determining log-likelihood ratios for transmitted information bits on the basis of the determined decision variables $(\hat{y}_1, \hat{y}_2)$ for delivery of soft-output bit decisions with reliability information;

**characterized in that** the decision variables $(\hat{y}_1, \hat{y}_2)$ are determined according to the following sub-steps:

building up received vectors according to

$$
\mathbf{y}_k = \begin{bmatrix} y_{2t-1}^{(1)} \\ y_{2t}^{(1)*} \\ \vdots \\ y_{2t-1}^{(n_R)} \\ y_{2t}^{(n_R)*} \end{bmatrix}, \qquad \mathbf{y}_{k+1} = \begin{bmatrix} y_{2t+1}^{(1)} \\ y_{2t+2}^{(1)*} \\ \vdots \\ y_{2t+1}^{(n_R)} \\ y_{2t+2}^{(n_R)*} \end{bmatrix}, \qquad \bar{\mathbf{y}}_k = \begin{bmatrix} y_{2t}^{(1)} \\ -y_{2t-1}^{(1)*} \\ \vdots \\ y_{2t}^{(n_R)} \\ -y_{2t-1}^{(n_R)*} \end{bmatrix},
$$

wherein
k is a vector index;
*t* is a time index;
$n_R$ is the number of reception antennas;
* is a complex conjugate operator; and.

$y_i^{(j)}$ is a symbol received at time *i* at reception antenna *j*;

further calculating a first decision variable $\hat{y}_1$ according to:

$$
\hat{y}_1 = \mathbf{y}_k^H \mathbf{y}_{k+1};
$$

wherein
*H* is operator of transposing a vector and applying the conjugate complex operator * to all vector elements; and
further calculating a second decision variable $\hat{y}_2$ according to:

$$\hat{y}_2 = \bar{\mathbf{y}}_k^H \mathbf{y}_{k+1}.$$

2. Method according to claim 1, **characterized in that** log-likelihood ratios for transmitted information bits are determined according to

$$L(\hat{u}_{k,l}) = log \frac{p(u_{k,l} = +1|\hat{y}_1, \hat{y}_2)}{p(u_{k,l} = -1|\hat{y}_1, \hat{y}_2)}$$

wherein
$k$ is a time index;
a vector of transmission bits $u_k$ of dimension $2log_2(M)$ is mapped onto one of the $M^2$ constellation elements of the differential transmit diversity scheme and $u_{k,l}$ is a transmission bit at position $l$ in $u_k$;
$\hat{y}_1$ is a first determined decision variable;
$\hat{y}_2$ is a second determined decision variable;
$p(u_{k,l} = +1|\hat{y}_1, \hat{y}_2)$ is a first conditional probablity for $u_{k,l} = +1$ in view of determined decision variables $\hat{y}_1$ and $\hat{y}_2$;
$p(u_{k,l} = -1|\hat{y}_1, \hat{y}_2)$ is a second conditional probablity for $u_{k,l} = -1$ in view of determined decision variables $\hat{y}_1$ and $\hat{y}_2$; and
$L(\hat{u}_{k,l})$ is the soft output.

3. Method according to claim 2, **characterized in that** the bit decision is determined according to

$$\hat{u}_{k,l} = sign(L(\hat{u}_{k,l}))$$

and the reliabilty information is determined according to

$$|L(\hat{u}_{k,l})|.$$

4. Method according to one of the claims 1 to 3, **characterized in that** log-likelihood ratios for transmitted information bits are determined through use of max-log approximations of log-likelihood ratios.

5. Method according to claim 4, **characterized in that** the max-log approximation of log-likelihood ratios for transmitted information bits is determined according to

$$L(\hat{u}_{k,l}) \approx$$

$$max_{\substack{(A(i),B(i))\\u_{k,l}(i)=+1}} \left\{ \frac{1}{2\sigma_{\hat{y}_1}^2} \sum_{i=1}^{n_T} \sum_{j=1}^{n_R} \left|h^{(i,j)}\right|^2 [Re\{A(i)\hat{y}_1^*\} + Re\{B(i)\hat{y}_2^*\}] + \frac{1}{2}\mathbf{u}(i)^T\mathbf{L_a}(\mathbf{u}) \right\} -$$

$$max_{\substack{(A(i),B(i))\\u_{k,l}(i)=-1}} \left\{ \frac{1}{2\sigma_{\hat{y}_1}^2} \sum_{i=1}^{n_T} \sum_{j=1}^{n_R} \left|h^{(i,j)}\right|^2 [Re\{A(i)\hat{y}_1^*\} + Re\{B(i)\hat{y}_2^*\}] + \frac{1}{2}\mathbf{u}(i)^T\mathbf{L_a}(\mathbf{u}) \right\}$$

wherein

[$A(i)$, $B(i)$)] is a vector of related constellation points of the differential transmit diversity scheme with $i \in \{1,..., M\}$;
the first *max* operator is applied to all constellations points [$A(i)$, $B(i)$] of the differential transmit diversity scheme and related transmission bits $u_{k,l}(i)$ having a value of +1;

the second *max* operator is applied to all constellations points [$A(i)$, $B(i)$] of the differential transmit diversity scheme and related transmission bits $u_{k,l}(i)$ having a value of -1;

$\sigma_{\tilde{y}1}^2$ is a measure of noise variance for the additive noise on equivalent transmission channels;

$n_T$ is the number of transmit antennas used to achieve transmit diversity;

$n_R$ is the number of reception antennas used to achieve diversity reception;

$h^{(i,j)}$ is a gain from transmit antenna $i$ to reception antenna $j$ at time $k$;

\* is complex conjugate operator;

*Re* is a real part operator;

u($i$) is a vector candidate for decision on transmission bits;

*T* is a transpose operator; and

$L_a$ is a vector of a priori log-likelihoods corresponding to the vector representation of transmission bits.

**6.** Method according to claim 5, **characterized in that** it further comprises a step of estimating a value of $\sum_{i=1}^{n_T} \sum_{j=1}^{n_R} \left| h^{(i,j)} \right|^2$ and $\sigma_{\tilde{y}1}^2$ using single input single output estimation techniques.

**7.** Method according to claim 6, **characterized in that** the step of single input single output channel estimation is achieved using training symbols inserted into the differential transmit diversity scheme before differential encoding.

**8.** Method according to claim 5, **characterized in that** it further comprises the step of setting a value of $\frac{1}{\sigma_{\tilde{y}1}^2} \sum_{i=1}^{n_T} \sum_{j=1}^{n_R} \left| h^{(i,j)} \right|^2$ to a constant value of $n_T \cdot n_R$.

**9.** Method according to claim 5, **characterized in that** it further comprises the step of setting a value of $\frac{1}{\sigma_{\tilde{y}1}^2} \sum_{i=1}^{n_T} \sum_{j=1}^{n_R} \left| h^{(i,j)} \right|^2$ to a value derived from decision variables ($\hat{y}_1$, $\hat{y}_2$) according to

$$h_e = \sqrt{\left| \hat{y}_1 \right|^2 + \left| \hat{y}_2 \right|^2}$$

as channel estimation.

**10.** Non-coherent soft-output detector for differential transmit antenna diversity from orthogonal designs, comprising:

a transformation unit adapted to transform a multiple input multiple output channel into equivalent single input single output channels using a differential transmit diversity scheme for determination of decision variables ($\hat{y}_1$, $\hat{y}_2$); and
a soft demapping unit adapted to determine log-likelihood ratios for transmitted information bits on the basis of the determined decision variables ($\hat{y}_1$, $\hat{y}_2$) for delivery of soft-output bit decisions with reliability information;

**characterized in that** the transformation unit comprises:

a vector building unit adapted to build up received vectors according to

$$\mathbf{y}_k = \begin{bmatrix} y_{2t-1}^{(1)} \\ y_{2t}^{(1)*} \\ \vdots \\ y_{2t-1}^{(n_R)} \\ y_{2t}^{(n_R)*} \end{bmatrix}, \quad \mathbf{y}_{k+1} = \begin{bmatrix} y_{2t+1}^{(1)} \\ y_{2t+2}^{(1)*} \\ \vdots \\ y_{2t+1}^{(n_R)} \\ y_{2t+2}^{(n_R)*} \end{bmatrix}, \quad \bar{\mathbf{y}}_k = \begin{bmatrix} y_{2t}^{(1)} \\ -y_{2t-1}^{(1)*} \\ \vdots \\ y_{2t}^{(n_R)} \\ -y_{2t-1}^{(n_R)*} \end{bmatrix},$$

wherein
k is a vector index;
*t* is a time index;
$n_R$ is the number of reception antennas;
* is a complex conjugate operator; and

$y_i^{(j)}$ is a symbol received at time i at reception antenna *j*;

a first decision variable calculation unit adapted to calculate a first decision variable $\hat{y}_1$ according to:

$$\hat{y}_1 = \mathbf{y}_k^H \mathbf{y}_{k+1};$$

wherein
*H* is operator of transposing a vector and applying the conjugate complex operator * to all vector elements; and
a first decision variable calculation unit adapted to calculate a second decision variable $\hat{y}_2$ according to:

$$\hat{y}_2 = \bar{\mathbf{y}}_k^H \mathbf{y}_{k+1}.$$

**11.** Non-coherent soft-output detector according to claim 10, **characterized in that** the soft demapping unit comprises a log-likelihood unit adapted to determine log-likelihood ratios for transmitted information bits according to

$$L(\hat{u}_{k,l}) = log \frac{p(u_{k,l} = +1|\hat{y}_1, \hat{y}_2)}{p(u_{k,l} = -1|\hat{y}_1, \hat{y}_2)}$$

wherein
*k* is a time index;
a vector of transmission bits $u_k$ of dimension $2log_2(M)$ is mapped onto one of the $M^2$ constellation elements of the differential transmit diversity scheme and $u_{k,l}$ is a transmission bit at position *l* in $u_k$;
$\hat{y}_1$ is a first determined decision variable;
$\hat{y}_2$ is a second determined decision variable;
$p(u_{k,l} = +1|\hat{y}_1, \hat{y}_2)$ is a first conditional probablity for $u_{k,l} = +1$ in view of detemined decision variables $\hat{y}_1$ and $\hat{y}_2$;
$p(u_{k,l} = -1|\hat{y}_1, \hat{y}_2)$ is a second conditional probablity for $u_{k,l} = -1$ in view of detemined decision variables $\hat{y}_1$ and $\hat{y}_2$; and
$L(\hat{u}_{k,l})$ is the soft output.

**12.** Non-coherent soft-output detector according to claim 11, **characterized in that** the soft demapping unit comprises a bit decision unit adapted to determine a bit decision according to

$$\hat{u}_{k,l} = sign(L(\hat{u}_{k,l}))$$

and that the bit decision unit is adapted to determine the reliabilty information according to

$$|L(\hat{u}_{k,l})|.$$

13. Non-coherent soft-output detector according to one of the claims 10 to 12, **characterized in that** the soft demapping unit comprises a max-log approximation unit adapted to determine log-likelihood ratios for transmitted information bits through max-log approximations of log-likelihood ratios.

14. Non-coherent soft-output detector according to claim 13, **characterized in that** the max-log approximation unit is adapted to determine log-likelihood ratios for transmitted information bits according to

$$L(\hat{u}_{k,l}) \approx$$

$$max_{\substack{(A(i),B(i)) \\ u_{k,l}(i)=+1}} \left\{ \frac{1}{2\sigma_{\hat{y}_1}^2} \sum_{i=1}^{n_T} \sum_{j=1}^{n_R} \left|h^{(i,j)}\right|^2 [Re\left\{A(i)\hat{y}_1^*\right\} + Re\left\{B(i)\hat{y}_2^*\right\}] + \frac{1}{2}\mathbf{u}(i)^T\mathbf{L_a}(\mathbf{u}) \right\} -$$

$$max_{\substack{(A(i),B(i)) \\ u_{k,l}(i)=-1}} \left\{ \frac{1}{2\sigma_{\hat{y}_1}^2} \sum_{i=1}^{n_T} \sum_{j=1}^{n_R} \left|h^{(i,j)}\right|^2 [Re\left\{A(i)\hat{y}_1^*\right\} + Re\left\{B(i)\hat{y}_2^*\right\}] + \frac{1}{2}\mathbf{u}(i)^T\mathbf{L_a}(\mathbf{u}) \right\}$$

.

wherein
$[A(i), B(i)]$ is a vector of related constellation points of the differential transmit diversity scheme with $i \in \{1, ... ,M\}$;
the first max operator is applied to all constellations points $[A(i), B(i)]$ of
the differential transmit diversity scheme and related transmission bits $u_{k,l}(i)$ having a value of +1;
the second *max* operator is applied to all constellations points $[A(i), B(i)]$ of the differential transmit diversity scheme and related transmission bits $u_{k,l}(i)$ having a value of -1;

$\sigma_{\hat{y}_1}^2$ is a measure of noise variance for the additive noise on equivalent transmission channels;
$n_T$ is the number of transmit antennas used to achieve transmit diversity,
$n_R$ is the number of reception antennas used to achieve diversity reception;
$h^{(i,j)}$ is a gain from transmit antenna $i$ to reception antenna $j$ at time $k$;
* is complex conjugate operator;
*Re* is a real part operator;
u($i$) is a vector candidate for decision on transmission bits;
$T$ is a transpose operator; and
$L_a$ is a vector of a priori log-likelihoods corresponding to the vector representation of transmission bits.

15. Non-coherent soft-output detector according to claim 14, **characterized in that** the soft demapping unit comprises a first estimation unit adapted to estimate a value of $\sum_{i=1}^{n_T} \sum_{j=1}^{n_R} \left|h^{(i,j)}\right|^2$ and $\sigma_{\hat{y}_1}^2$ using single input single output estimation techniques.

16. Non-coherent soft-output detector according to claim 15, **characterized in that** the the first estimation unit is adapted to achieve single input single output channel estimation through use training symbols inserted into the differential transmit diversity scheme before differential encoding.

17. Non-coherent soft-output detector according to claim 14, **characterized in that** the soft demapping unit comprises a second channel estimation unit adapted to estimate a value of $\frac{1}{\sigma_{\hat{y}_1}^2} \sum_{i=1}^{n_T} \sum_{j=1}^{n_R} \left|h^{(i,j)}\right|^2$ as constant value of

$n_T$. $n_R$.

**18.** Non-coherent soft-output detector according to claim 14, **characterized in that** the soft demapping unit comprises a third estimation unit adapted to estimate a value of $\frac{1}{\sigma_{\hat{y}1}^2} \sum_{i=1}^{n_T} \sum_{j=1}^{n_R} \left| h^{(i,j)} \right|^2$ as a value derived from decision variables $(\hat{y}_1, \hat{y}_2)$ according to

$$h_e = \sqrt{|\hat{y}_1|^2 + |\hat{y}_2|^2}.$$

**19.** Computer program product directly loadable into the internal memory of a soft output detector detector comprising software code portions for performing the steps of one of the claims 1 to 9, when the product is run on a processor of a soft output detector.

**Patentansprüche**

**1.** Verfahren zur nicht-kohärenten Detektierung für eine unscharfe Ausgabe für eine Differentiell-Sendeantennen-Diversität von orthogonalen Ausführungen, die Schritte umfassend zum:

Transformieren eines Mehrfacheingangs-Mehrfachausgangs-Kanals in äquivalente Einfacheingangs-Einfachausgangs-Kanäle mit Verwenden eines Differentiell-Sendediversität-Schemas zur Bestimmung von Entschei-dungsvariablen $(\hat{y}_1, \hat{y}_2)$; und
Bestimmen eines Log-Likelihood-Verhältnisses für übertragene Informationsbits auf der Basis der bestimmten Entscheidungsvariablen $(\hat{y}_1, \hat{y}_2)$ zur Lieferung von Bitentscheidungen für eine unscharfe Ausgabe mit einer Zuverlässigkeitsinformation;

**dadurch gekennzeichnet, dass**
die Entscheidungsvariablen $(\hat{y}_1, \hat{y}_2)$ bestimmt werden gemäß den folgenden Unterschritten:

Aufbauen empfangener Vektoren gemäß

$$\mathbf{y}_k = \begin{bmatrix} y_{2t-1}^{(1)} \\ y_{2t}^{(1)*} \\ \vdots \\ y_{2t-1}^{(n_R)} \\ y_{2t}^{(n_R)*} \end{bmatrix}, \quad \mathbf{y}_{k+1} = \begin{bmatrix} y_{2t+1}^{(1)} \\ y_{2t+2}^{(1)*} \\ \vdots \\ y_{2t+1}^{(n_R)} \\ y_{2t+2}^{(n_R)*} \end{bmatrix}, \quad \bar{\mathbf{y}}_k = \begin{bmatrix} y_{2t}^{(1)} \\ -y_{2t-1}^{(1)*} \\ \vdots \\ y_{2t}^{(n_R)} \\ -y_{2t-1}^{(n_R)*} \end{bmatrix},$$

wobei
k ein Vektorindex ist;
t ein Zeitindex ist;
$n_R$ die Anzahl von Empfangsantennen ist;
* ein Komplex-Konjugiert-Operator ist; und
$y_i^{(j)}$ ein bei einer Zeit i bei Empfangsantenne j empfangenes Symbol ist;
ferner Berechnen einer ersten Entscheidungsvariablen $\hat{y}_1$ gemäß:

$$\hat{y}_1 = y_k^H y_{k+1} \; ;$$

wobei

H ein Operator zum Transponieren eines Vektors und Anwenden des Konjugiert-Komplex-Operators * auf sämtliche Vektorelemente ist; und

ferner Berechnen einer zweiten Entscheidungsvariablen $\hat{y}_2$ gemäß:

$$\hat{y}_2 = \bar{y}_k^H \, y_{k+1} \; .$$

2. Verfahren gemäß Anspruch 1, **dadurch gekennzeichnet, dass** Log-Likelihood-Verhältnisse für übertragene Informationsbits bestimmt werden gemäß

$$L(\hat{u}_{k,l}) = log\frac{p(u_{k,l} = +1|\hat{y}_1, \hat{y}_2)}{p(u_{k,l} = -1|\hat{y}_1, \hat{y}_2)}$$

wobei

k ein Zeitindex ist;

ein Vektor von Übertragungsbits $u_k$ einer Dimension $2log_2(M)$ auf eines der $M^2$ Konstellationselemente des Differentiell-Sendediversitäts-Schemas abgebildet wird und $u_{k,l}$ ein Übertragungsbit bei Position $l$ in $u_k$ ist;

$\hat{y}_1$ eine erste bestimmte Entscheidungsvariable ist;

$\hat{y}_2$ eine zweite bestimmte Entscheidungsvariable ist;

$p(u_{k,l}=+1|\hat{y}_1, \hat{y}_2)$ eine erste bedingte Wahrscheinlichkeit für $u_{k,l}=$ +1 angesichts bestimmter Entscheidungsvariablen $\hat{y}_1$ und $\hat{y}_2$ ist;

$p(u_{k,l}=-1|\hat{y}_1, \hat{y}_2)$ eine zweite bedingte Wahrscheinlichkeit für $u_{k,l}=$ -1 angesichts bestimmter Entscheidungsvariablen $\hat{y}_1$ und $\hat{y}_2$ ist; und

$L(\hat{u}_{k,l})$ die unscharfe Ausgabe ist.

3. Verfahren gemäß Anspruch 2, **dadurch gekennzeichnet, dass** die Bitentscheidung bestimmt wird gemäß

$$\hat{u}_{k,l} = sign(L(\hat{u}_{k,l}))$$

und die Zuverlässigkeitsinformation bestimmt wird gemäß

$$\left| L(\hat{u}_{k,l}) \right| \; .$$

4. Verfahren gemäß einem der Ansprüche 1 bis 3, **dadurch gekennzeichnet, dass** Log-Likelihood-Verhältnisse für übertragene Informationsbits bestimmt werden durch Verwendung von Max-Log-Näherungen von Log-Likelihood-Verhältnissen.

5. Verfahren gemäß Anspruch 4, **dadurch gekennzeichnet, dass** die Max-Log-Näherung von Log-Likelihood-Verhältnissen für übertragene Informationsbits bestimmt wird gemäß

19

$$L(\hat{u}_{k,l}) \approx$$

$$max_{\substack{(A(i),B(i)) \\ u_{k,l}(i)=+1}} \left\{ \frac{1}{2\sigma_{\hat{y}_1}^2} \sum_{i=1}^{n_T} \sum_{j=1}^{n_R} \left| h^{(i,j)} \right|^2 [Re\{A(i)\hat{y}_1^*\} + Re\{B(i)\hat{y}_2^*\}] + \frac{1}{2}\mathbf{u}(i)^T \mathbf{L_a}(\mathbf{u}) \right\} -$$

$$max_{\substack{(A(i),B(i)) \\ u_{k,l}(i)=-1}} \left\{ \frac{1}{2\sigma_{\hat{y}_1}^2} \sum_{i=1}^{n_T} \sum_{j=1}^{n_R} \left| h^{(i,j)} \right|^2 [Re\{A(i)\hat{y}_1^*\} + Re\{B(i)\hat{y}_2^*\}] + \frac{1}{2}\mathbf{u}(i)^T \mathbf{L_a}(\mathbf{u}) \right\}$$

wobei

$[A(i),B(i)]$ ein Vektor bezogener Konstellationspunkte des Differentiell-Sendediversitäts-Schemas mit $i \in \{1,...,M\}$ ist;
der erste max Operator auf alle Konstellationspunkte $[A(i),B(i)]$ des Differentiell-Sendediversitäts-Schemas und bezogene Übertragungsbits $u_{k,l}(i)$ mit einem Wert von +1 angewendet wird;

der zweite max Operator auf alle Konstellationspunkte $[A(i),B(i)]$ des Differentiell-Sendediversitäts-Schemas und bezogene Übertragungsbits $u_{k,l}(i)$ mit einem Wert von -1 angewendet wird;

$\sigma_{\hat{y}_1}^2$ ein Maß einer Rauschvarianz für das additive Rauschen auf äquivalenten Übertragungskanälen ist;

$n_T$ die Anzahl von zum Erreichen einer Sendediversität verwendeten Sendeantennen ist;

$n_R$ die Anzahl von zum Erreichen eines Diversitätsempfangs verwendeten Empfangsantennen ist;

$h^{(i,j)}$ ein Verstärkungsfaktor von einer Sendeantenne $i$ zu einer Empfangsantenne $j$ zur Zeit $k$ ist;
* ein Komplex-Konjugiert-Operator ist;
$Re$ ein Operator für einen reellen Teil ist;
u(i) ein Vektorkandidat für eine Entscheidung über Übertragungsbits ist;
$T$ ein Transponiert-Operator ist; und
$L_a$ ein Vektor von a priori Log-Likelihood-Werten ist, die der Vektordarstellung von Übertragungsbits entspricht.

6. Verfahren gemäß Anspruch 5, **dadurch gekennzeichnet, dass** es ferner den Schritt umfasst zum Schätzen eines Wertes von $\sum_{i=1}^{n_T} \sum_{j=1}^{n_R} \left| h^{(i,j)} \right|^2$ und $\sigma_{\hat{y}_1}^2$ mit Verwenden von Einfacheingangs-Einfachausgangs-Schätzungstechniken.

7. Verfahren gemäß Anspruch 6, **dadurch gekennzeichnet, dass** der Schritt der Einfacheingangs-Einfachausgangs-Kanalschätzung erreicht wird mit Verwenden von Trainingssymbolen, die in das Differentiell-Sendediversitäts-Schema vor einem differentiellen Codieren eingefügt sind.

8. Verfahren gemäß Anspruch 5, **dadurch gekennzeichnet, dass** es ferner den Schritt umfasst zum Setzen eines Wertes von $\frac{1}{\sigma_{\hat{y}_1}^2} \sum_{i=1}^{n_T} \sum_{j=1}^{n_R} \left| h^{(i,j)} \right|^2$ auf einen konstanten Wert von $n_T \cdot n_R$.

9. Verfahren gemäß Anspruch 5, **dadurch gekennzeichnet, dass** es ferner den Schritt umfasst zum Setzen eines Wertes von $\frac{1}{\sigma_{\hat{y}_1}^2} \sum_{i=1}^{n_T} \sum_{j=1}^{n_R} \left| h^{(i,j)} \right|^2$ auf einen Wert, der von Entscheidungsvariablen $(\hat{y}_1, \hat{y}_2)$ abgeleitet ist gemäß

$$h_e = \sqrt{\left| \hat{y}_1 \right|^2 + \left| \hat{y}_2 \right|^2}$$ als Kanalschätzung.

10. Detektor zur nicht-kohärenten Detektierung für eine unscharfe Ausgabe für eine Differentiell-Sendeantennen-Diversität von orthogonalen Ausführungen, umfassend:

eine Transformationseinheit, die angepasst ist zum Transformieren eines Mehrfacheingangs-Mehrfachausgangs-Kanals in äquivalente Einfacheingangs-Einfachausgangs-Kanäle mit Verwenden eines Differentiell-Sendediversität-Schemas zur Bestimmung von Entscheidungsvariablen $(\hat{y}_1, \hat{y}_2)$ ; und

eine Einheit zum unscharfen Rückabbilden, die angepasst ist zum Bestimmen eines Log-Likelihood-Verhältnisses für übertragene Informationsbits auf der Basis der bestimmten Entscheidungsvariablen $(\hat{y}_1, \hat{y}_2)$ zur Lieferung von Bitentscheidungen für eine unscharfe Ausgabe mit einer Zuverlässigkeitsinformation;

**dadurch gekennzeichnet, dass** Transformationseinheit umfasst:

eine Vektorbildungseinheit, die angepasst ist zum Aufbauen empfangener Vektoren gemäß

$$\mathbf{y}_k = \begin{bmatrix} y_{2t-1}^{(1)} \\ y_{2t}^{(1)*} \\ \vdots \\ y_{2t-1}^{(n_R)} \\ y_{2t}^{(n_R)*} \end{bmatrix}, \qquad \mathbf{y}_{k+1} = \begin{bmatrix} y_{2t+1}^{(1)} \\ y_{2t+2}^{(1)*} \\ \vdots \\ y_{2t+1}^{(n_R)} \\ y_{2t+2}^{(n_R)*} \end{bmatrix}, \qquad \bar{\mathbf{y}}_k = \begin{bmatrix} y_{2t}^{(1)} \\ -y_{2t-1}^{(1)*} \\ \vdots \\ y_{2t}^{(n_R)} \\ -y_{2t-1}^{(n_R)*} \end{bmatrix},$$

wobei
k ein Vektorindex ist;
t ein Zeitindex ist;
$n_R$ die Anzahl von Empfangsantennen ist;
* ein Komplex-Konjugiert-Operator ist; und
$y_i^{(j)}$ ein bei einer Zeit i bei Empfangsantenne j empfangenes Symbol ist;
eine Berechnungseinheit für eine erste Entscheidungsvariable, die angepasst ist zum Berechnen einer ersten Entscheidungsvariablen $\hat{y}_1$ gemäß:

$$\hat{y}_1 = y_k^H \, y_{k+1} \, ;$$

wobei
H ein Operator zum Transponieren eines Vektors und Anwenden des Konjugiert-Komplex-Operators * auf sämtliche Vektorelemente ist; und
eine Berechnungseinheit für eine erste Entscheidungsvariable, die angepasst ist zum Berechnen einer zweiten Entscheidungsvariablen $\hat{y}_2$ gemäß:

$$\hat{y}_2 = \bar{y}_k^H \, y_{k+1} \, .$$

11. Detektor zur nicht-kohärenten Detektierung für eine unscharfe Ausgabe gemäß Anspruch 10, **dadurch gekennzeichnet, dass** die Einheit zum unscharfen Rückabbilden eine Log-Likelihood-Einheit umfasst, die angepasst ist zum Bestimmen von Log-Likelihood-Verhältnissen für übertragene Informationsbits gemäß

$$L(\hat{u}_{k,l}) = log \frac{p(u_{k,l} = +1 | \hat{y}_1, \hat{y}_2)}{p(u_{k,l} = -1 | \hat{y}_1, \hat{y}_2)}$$

wobei
k ein Zeitindex ist;
ein Vektor von Übertragungsbits $u_k$ einer Dimension $2log_2 (M)$ auf eines der $M^2$ Konstellationselemente des Differentiell-Sendediversitäts-Schemas abgebildet wird und $u_{k,l}$ ein Übertragungsbit bei Position *l* in $u_k$ ist;

$\overset{\wedge}{y}_1$ eine erste bestimmte Entscheidungsvariable ist;

$\overset{\wedge}{y}_2$ eine zweite bestimmte Entscheidungsvariable ist;

$p(u_{k,l}=+1|\overset{\wedge}{y}_1,\overset{\wedge}{y}_2)$ eine erste bedingte Wahrscheinlichkeit für $u_{k,l}=+1$ angesichts bestimmter Entscheidungsvariablen $\overset{\wedge}{y}_1$ und $\overset{\wedge}{y}_2$ ist;

$p(u_{k,l}=-1|\overset{\wedge}{y}_1,\overset{\wedge}{y}_2)$ eine zweite bedingte Wahrscheinlichkeit für $u_{k,l}=-1$ angesichts bestimmter Entscheidungsvariablen $\overset{\wedge}{y}_1$ und $\overset{\wedge}{y}_2$ ist; und

$L(\hat{u}_{k,l})$ die unscharfe Ausgabe ist.

12. Detektor zur nicht-kohärenten Detektierung für eine unscharfe Ausgabe gemäß Anspruch 11, **dadurch gekennzeichnet, dass** die Einheit zum unscharfen Rückabbilden eine Bitentscheidungseinheit umfasst, die angepasst ist zum Bestimmen einer Bitentscheidung gemäß

$$\hat{u}_{k,l} = sign(L(\hat{u}_{k,l}))$$

und dass die Bitentscheidungseinheit angepasst ist zum Bestimmen der Zuverlässigkeitsinformation gemäß

$$\left| L(\hat{u}_{k,l}) \right| .$$

13. Detektor zur nicht-kohärenten Detektierung für eine unscharfe Ausgabe gemäß einem der Ansprüche 10 bis 12, **dadurch gekennzeichnet, dass** die Einheit zum unscharfen Rückabbilden eine Max-Log-Näherungseinheit umfasst, die ausgebildet ist zum Bestimmen von Log-Likelihood-Verhältnissen für übertragene Informationsbits durch Verwendung von Max-Log-Näherungen von Log-Likelihood-Verhältnissen.

14. Detektor zur nicht-kohärenten Detektierung für eine unscharfe Ausgabe gemäß Anspruch 13, **dadurch gekennzeichnet, dass** die Max-Log-Näherungseinheit angepasst ist zum Bestimmen von Log-Likelihood-Verhältnissen für übertragene Informationsbits gemäß

$$L(\hat{u}_{k,l}) \approx$$

$$max_{\substack{(A(i),B(i)) \\ u_{k,l(i)}=+1}} \left\{ \frac{1}{2\sigma_{\hat{y}_1}^2} \sum_{i=1}^{n_T} \sum_{j=1}^{n_R} \left|h^{(i,j)}\right|^2 \left[Re\left\{A(i)\hat{y}_1^\bullet\right\} + Re\left\{B(i)\hat{y}_2^\bullet\right\}\right] + \frac{1}{2}\mathbf{u}(i)^T \mathbf{L}_\mathbf{a}(\mathbf{u}) \right\} -$$

$$max_{\substack{(A(i),B(i)) \\ u_{k,l}(i)=-1}} \left\{ \frac{1}{2\sigma_{\hat{y}_1}^2} \sum_{i=1}^{n_T} \sum_{j=1}^{n_R} \left|h^{(i,j)}\right|^2 \left[Re\left\{A(i)\hat{y}_1^\bullet\right\} + Re\left\{B(i)\hat{y}_2^\bullet\right\}\right] + \frac{1}{2}\mathbf{u}(i)^T \mathbf{L}_\mathbf{a}(\mathbf{u}) \right\}$$

wobei

*[A(i),B(i)]* ein Vektor bezogener Konstellationspunkte des Differentiell-Sendediversitäts-Schemas mit $i \in \{1,...,M\}$ ist;

der erste max Operator auf alle Konstellationspunkte *[A(i),B(i)]* des Differentiell-Sendediversitäts-Schemas und bezogene Übertragungsbits $u_{k,l}(i)$ mit einem Wert von +1 angewendet wird;

der zweite *max* Operator auf alle Konstellationspunkte *[A(i),B(i)]* des Differentiell-Sendediversitäts-Schemas und bezogene Übertragungsbits $u_{k,l}(i)$ mit einem Wert von -1 angewendet wird;

$\sigma_{\hat{y}_1}^2$ ein Maß einer Rauschvarianz für das additive Rauschen auf äquivalenten Übertragungskanälen ist;

$n_T$ die Anzahl von zum Erreichen einer Sendediversität verwendeten Sendeantennen ist;

$n_R$ die Anzahl von zum Erreichen eines Diversitätsempfangs verwendeten Empfangsantennen ist;

$h^{(i,j)}$ ein Verstärkungsfaktor von einer Sendeantenne *i* zu einer Empfangsantenne *j* zur Zeit *k* ist;

* ein Komplex-Konjugiert-Operator ist;

*Re* ein Operator für einen reellen Teil ist;

u(i) ein Vektorkandidat für eine Entscheidung über Übertragungsbits ist;

*T* ein Transponiert-Operator ist; und

L$_a$ ein Vektor von a priori Log-Likelihood-Werten ist, die der Vektordarstellung von Übertragungsbits entspricht.

**15.** Detektor zur nicht-kohärenten Detektierung für eine unscharfe Ausgabe gemäß Anspruch 14, **dadurch gekennzeichnet, dass** die Einheit zum unscharfen Rückabbilden eine erste Schätzungseinheit umfasst, die angepasst ist zum Schätzen eines Wertes von $\sum_{i=1}^{n_T} \sum_{j=1}^{n_R} \left| h^{(i,\, j)} \right|^2$ und $\sigma_{\hat{y}_1}^2$ mit Verwenden von Einfacheingangs-Einfachausgangs-Schätzungstechniken.

**16.** Detektor zur nicht-kohärenten Detektierung für eine unscharfe Ausgabe gemäß Anspruch 15, **dadurch gekennzeichnet, dass** die erste Schätzungseinheit angepasst ist zum Erreichen einer Einfacheingangs-Einfachausgangs-Kanalschätzung durch Verwendung von Trainingssymbolen, die in das Differentiell-Sendediversitäts-Schema vor einem differentiellen Codieren eingefügt sind.

**17.** Detektor zur nicht-kohärenten Detektierung für eine unscharfe Ausgabe gemäß Anspruch 14, **dadurch gekennzeichnet, dass** die Einheit zum unscharfen Rückabbilden eine zweite Kanalschätzungseinheit umfasst die angepasst ist zum Schätzen eines Wertes von $\dfrac{1}{\sigma_{\hat{y}_1}^2} \sum_{i=1}^{n_T} \sum_{j=1}^{n_R} \left| h^{(i,\, j)} \right|^2$ als einen konstanten Wert von $n_T \cdot n_R$.

**18.** Detektor zur nicht-kohärenten Detektierung für eine unscharfe Ausgabe gemäß Anspruch 14, **dadurch gekennzeichnet, dass** die Einheit zum unscharfen Rückabbilden eine dritte Schätzungseinheit umfasst, die angepasst ist zum Schätzen eines Wertes von $\dfrac{1}{\sigma_{\hat{y}_1}^2} \sum_{i=1}^{n_T} \sum_{j=1}^{n_R} \left| h^{(i,\, j)} \right|^2$ als einen Wert, der von Entscheidungsvariablen ($\hat{y}_1$, $\hat{y}_2$) abgeleitet ist gemäß $h_e = \sqrt{\left| \hat{y}_1 \right|^2 + \left| \hat{y}_2 \right|^2}$ .

**19.** Computerprogrammprodukt, das direkt in den internen Speicher eines Detektors für eine unscharfe Ausgabe ladbar ist, Softwarecode-Teilstücke umfassend zum Durchführen der Schritte eines der Ansprüche 1 bis 9, wenn das Produkt auf einem Prozessor des Detektors für eine unscharfe Ausgabe betrieben wird.

**Revendications**

**1.** Procédé de détection à sortie pondérée non cohérente pour une diversité d'antennes à émission différentielle à partir de configurations orthogonales, comprenant les étapes consistant à :

transformer un canal à entrées multiples sorties multiples en canaux à entrée unique sortie unique équivalents en utilisant un système à diversité d'émission différentielle pour la détermination de variables de décision ($\hat{y}_1$, $\hat{y}_2$) ; et

déterminer des logarithmes de rapports de vraisemblance pour des bits d'informations émis sur la base des variables de décision déterminées ($\hat{y}_1$, $\hat{y}_2$) pour la délivrance de décisions binaires de sortie pondérée avec des informations de fiabilité ;

**caractérisé en ce que** les variables de décision ($\hat{y}_1$, $\hat{y}_2$) sont déterminées selon les sous-étapes suivantes consistant à :

accumuler des vecteurs reçus selon

$$Y_k = \begin{bmatrix} Y_{2t-1}^{(1)} \\ Y_{2t}^{(1)*} \\ \vdots \\ Y_{2t-1}^{(n_R)} \\ Y_{2t}^{(n_R)*} \end{bmatrix}, \quad Y_{k+1} = \begin{bmatrix} Y_{2t+1}^{(1)} \\ Y_{2t+2}^{(1)*} \\ \vdots \\ Y_{2t+1}^{(n_R)} \\ Y_{2t+2}^{(n_R)*} \end{bmatrix}, \quad \overline{Y}_k = \begin{bmatrix} Y_{2t}^{(1)} \\ -Y_{2t-1}^{(1)*} \\ \vdots \\ Y_{2t}^{(n_R)} \\ -Y_{2t-1}^{(n_R)*} \end{bmatrix}$$

dans lesquels

k est un indice vectoriel ;

t est un indice temporel ;

$n_R$ est le nombre d'antennes de réception ;

* est un opérateur conjugué complexe ; et

$Y_i^{(j)}$ est un symbole reçu à l'instant i au niveau de l'antenne de réception j ;

calculer en outre une première variable de décision $\hat{y}_1$ selon :

$$\hat{Y}_1 = Y_k^H \, Y_{k+1}$$

dans laquelle

H est un opérateur de transposition d'un vecteur et d'application de l'opérateur complexe conjugué * à tous les éléments vectoriels ; et

calculer en outre une seconde variable de décision $\hat{y}_2$ selon :

$$\hat{Y}_2 = \overline{Y}_k^H \, Y_{k+1}$$

**2.** Procédé selon la revendication 1, **caractérisé en ce que** des logarithmes de rapports de vraisemblance pour des bits d'informations émis sont déterminés selon

$$L(\hat{u}_{k,1}) = \log \frac{p\left(u_{k,1} = +1 \,\middle|\, \hat{y}_1, \hat{y}_2\right)}{p\left(u_{k,1} = -1 \,\middle|\, \hat{y}_1, \hat{y}_2\right)}$$

dans laquelle

k est un indice temporel ;

un vecteur de bits d'émission $u_k$ de dimension $2\log_2(M)$ est mis en correspondance sur un des éléments de constellation $M^2$ du système à diversité d'émission différentielle et $u_{k,l}$ est un bit d'émission à la position 1 dans $u_k$ ;

$\hat{y}_1$ est une première variable de décision déterminée ;

$\hat{y}_2$ est une seconde variable de décision déterminée ;

$P(u_{k,l} = +1 \mid \hat{y}_1, \hat{y}_2)$ est une première probabilité conditionnelle pour $u_{k,l} = +1$ en vue des variables de décision déterminées $\hat{y}_1$ et $\hat{y}_2$ ;

$P(u_{k,l} = -1 \mid \hat{y}_1, \hat{y}_2)$ est une seconde probabilité conditionnelle pour $u_{k,l} = -1$ en vue des variables de décision déterminées $\hat{y}_1$ et $\hat{y}_2$ ; et

$L(\hat{u}_{k,l})$ est la sortie pondérée.

**3.** Procédé selon la revendication 2, **caractérisé en ce que** la décision binaire est déterminée selon

**EP 1 593 224 B1**

$$\hat{u}_{k,l} = \text{sign } (L (\hat{u}_{k,l}))$$

et les informations de fiabilité sont déterminées selon

$$| \; L \; (\hat{u}_{k,l}) \; |$$

**4.** Procédé selon l'une des revendications 1 à 3, **caractérisé en ce que** des logarithmes de rapports de vraisemblance pour des bits d'informations émis sont déterminés par l'utilisation d'approximations max-log de logarithmes de rapports de vraisemblance.

**5.** Procédé selon la revendication 4, **caractérisé en ce que** l'approximation max-log de logarithmes de rapports de vraisemblance pour des bits d'informations émis est déterminée selon

$$L \; (\hat{u}_{k,l}) \approx$$

$$\max_{\substack{(A(i),B(i)) \\ u_{k,l}(i)=+1}} \left\{ \frac{1}{2\sigma_{\hat{Y}1}^2} \sum_{i=1}^{n_T} \sum_{j=1}^{n_R} \left| h^{(i,j)} \right|^2 \left[ \text{Re}\{A(i)\,\hat{y}_1^*\} + \text{Re}\{B(i)\,\hat{y}_2^*\} \right] + \frac{1}{2} u(i)^T L_a(u) \right\} -$$

$$\max_{\substack{(A(i),B(i)) \\ u_{k,l}(i)=-1}} \left\{ \frac{1}{2\sigma_{\hat{Y}1}^2} \sum_{i=1}^{n_T} \sum_{j=1}^{n_R} \left| h^{(i,j)} \right|^2 \left[ \text{Re}\{A(i)\,\hat{y}_1^*\} + \text{Re}\{B(i)\,\hat{y}_2^*\} \right] + \frac{1}{2} u(i)^T L_a(u) \right\}$$

dans lesquelles
[A (i), B (i)] est un vecteur de points de constellation liés du système à diversité d'émission différentielle avec i ∈ {1, ..., M} ;
le premier opérateur max est appliqué à tous les points de constellations [A (i), B (i)] du système à diversité d'émission différentielle et des bits d'émission liés $u_{k,l}$ (i) ayant une valeur de + 1 ;
le second opérateur *max* est appliqué à tous les points de constellations [A (i), B (i)] du système à diversité d'émission différentielle et des bits d'émission liés $u_{k,l}$ (i) ayant une valeur de - 1 ;

$\sigma_{\hat{Y}1}^2$ est une mesure de variance de bruit pour le bruit additif sur des canaux d'émission équivalents ;

$n_T$ est le nombre d'antennes d'émission utilisées pour parvenir à une diversité d'émission ;

$n_R$ est le nombre d'antennes de réception utilisées pour parvenir à une réception en diversité ;

$h^{(i,j)}$ est un gain d'une antenne d'émission i à une antenne de réception j à l'instant k ;
* est un opérateur conjugué complexe ;
Re est un opérateur à partie réelle ;
u(i) est un candidat vectoriel pour une décision sur des bits d'émission ;
T est un opérateur de transposition ; et
$L_a$ est un vecteur de logarithmes de rapports de vraisemblance a priori correspondant à la représentation vectorielle de bits d'émission.

**6.** Procédé selon la revendication 5, **caractérisé en ce qu'**il comprend en outre une étape d'évaluation d'une valeur de $\sum_{i=1}^{n_T} \sum_{j=1}^{n_R} \left| h^{(i,j)} \right|^2$ et $\sigma_{\hat{Y}1}^2$ en utilisant des techniques d'évaluation à entrée unique sortie unique.

**7.** Procédé selon la revendication 6, **caractérisé en ce que** l'étape d'évaluation de canal à entrée unique sortie unique est réalisée en utilisant des symboles d'apprentissage insérés dans le système à diversité d'émission différentielle avant le codage différentiel.

8. Procédé selon la revendication 5, **caractérisé en ce qu'**il comprend en outre l'étape consistant à fixer une valeur

de $\dfrac{1}{2\sigma_{\hat{y}_1}} \sum_{i=1}^{n_T} \sum_{j=1}^{n_R} \left| h^{(i,j)} \right|^2$ à une valeur constante de $n_T \cdot n_R$.

9. Procédé selon la revendication 5, **caractérisé en ce qu'**il comprend en outre l'étape consistant à fixer une valeur

de $\dfrac{1}{2\sigma_{\hat{y}_1}} \sum_{i=1}^{n_T} \sum_{j=1}^{n_R} \left| h^{(i,j)} \right|^2$ à une valeur déduite à partir de variables de décision $(\hat{y}_1, \hat{y}_2)$ selon

$$h_e = \sqrt{\left|\hat{y}_1\right|^2 + \left|\hat{y}_2\right|^2}$$

en tant qu'évaluation de canal.

10. Détecteur à sortie pondérée non cohérente pour une diversité d'antennes à émission différentielle à partir de configurations orthogonales, comprenant :

une unité de transformation conçue pour transformer un canal à entrée multiple sortie multiple en canaux à entrée unique sortie unique équivalents en utilisant un système à diversité d'émission différentielle pour la détermination de variables de décision $(\hat{y}_1, \hat{y}_2)$ ; et
une unité d'enlèvement de correspondance pondérée conçue pour déterminer des logarithmes de rapports de vraisemblance pour des bits d'informations émis sur la base des variables de décision déterminées $(\hat{y}_1, \hat{y}_2)$ pour la délivrance de décisions binaires à sortie pondérée avec des informations de fiabilité ;

**caractérisé en ce que** l'unité de transformation comprend :

une unité d'accumulation de vecteur conçue pour accumuler des vecteurs reçus selon

$$Y_k = \begin{bmatrix} Y_{2t-1}^{(1)} \\ Y_{2t}^{(1)*} \\ \vdots \\ Y_{2t-1}^{(n_R)} \\ Y_{2t}^{(n_R)*} \end{bmatrix}, \quad Y_{k+1} = \begin{bmatrix} Y_{2t+1}^{(1)} \\ Y_{2t+2}^{(1)*} \\ \vdots \\ Y_{2t+1}^{(n_R)} \\ Y_{2t+2}^{(n_R)*} \end{bmatrix}, \quad \overline{Y}_k = \begin{bmatrix} Y_{2t}^{(1)} \\ -Y_{2t-1}^{(1)*} \\ \vdots \\ Y_{2t}^{(n_R)} \\ -Y_{2t-1}^{(n_R)*} \end{bmatrix}$$

dans lesquels
$k$ est un indice vectoriel ;
$t$ est un indice temporel ;
$n_R$ est le nombre d'antennes de réception ;
$*$ est un opérateur conjugué complexe ; et
$y_i^{(j)}$ est un symbole reçu à l'instant $i$ au niveau de l'antenne de réception $j$ ;
une première unité de calcul de variable de décision conçue pour calculer une première variable de décision $\hat{y}_1$ selon :

$$\hat{y}_1 = Y_k^H Y_{k+1} ;$$

dans laquelle
H est un opérateur de transposition d'un vecteur et d'application de l'opérateur complexe conjugué $*$ à tous les éléments vectoriels ; et

une première unité de calcul de variable de décision conçue pour calculer une seconde variable de décision $\hat{y}_2$ selon :

$$\hat{y}_2 \;=\; \overline{y}_k^H \; y_{k+1}$$

**11.** Détecteur à sortie pondérée non cohérente selon la revendication 10, **caractérisé en ce que** l'unité d'enlèvement de correspondance pondérée comprend une unité de logarithme de vraisemblance conçue pour déterminer des logarithmes de rapports de vraisemblance pour des bits d'informations émis selon

$$L\,(\hat{u}_{k,l}) \;=\; \log \frac{p\left(u_{k,l} = +1 \,\middle|\, \hat{y}_1, \hat{y}_2\right)}{p\left(u_{k,l} = -1 \,\middle|\, \hat{y}_1, \hat{y}_2\right)}$$

dans laquelle

k est un indice temporel ;

un vecteur de bits d'émission $u_k$ de dimension $2\log_2$ (M) est mis en correspondance sur un des éléments de constellation $M^2$ du système à diversité d'émission différentielle et $u_{k,l}$ est un bit d'émission à la position 1 dans $u_k$ ;

$\hat{y}_1$ est une première variable de décision déterminée ;

$\hat{y}_2$ est une seconde variable de décision déterminée ;

$p\,(u_{k,l} = +1 \,|\, \hat{y}_1, \hat{y}_2)$ est une première probabilité conditionnelle pour $u_{k,l} = +1$ en vue de variables de décision déterminées $\hat{y}_1$ et $\hat{y}_2$ ;

$p\,(u_{k,l} = -1 \,|\, \hat{y}_1, \hat{y}_2)$ est une seconde probabilité conditionnelle pour $u_{k,l} = -1$ en vue de variables de décision déterminées $\hat{y}_1$ et $\hat{y}_2$ ; et

$L\,(\hat{u}_{k,l})$ est la sortie pondérée.

**12.** Détecteur à sortie pondérée non cohérente selon la revendication 11, **caractérisé en ce que** l'unité d'enlèvement de correspondance pondérée comprend une unité de décision binaire conçue pour déterminer une décision binaire selon

$$\hat{u}_{k,l} \;=\; \text{sign}\,(L\,(\hat{u}_{k,l}))$$

et **en ce que** l'unité de décision binaire est conçue pour déterminer les informations de fiabilité selon

$$\mid L(\hat{u}_{k,l}) \mid$$

**13.** Détecteur à sortie pondérée non cohérente selon l'une des revendications 10 à 12, **caractérisé en ce que** l'unité d'enlèvement de correspondance pondérée comprend une unité d'approximation max-log conçue pour décider des logarithmes de rapports de vraisemblance pour des bits d'informations émis par des approximations max-log de logarithmes de rapports de vraisemblance.

**14.** Détecteur à sortie pondérée non cohérente selon la revendication 13, **caractérisé en ce que** l'unité d'approximation max-log est conçue pour déterminer des logarithmes de rapports de vraisemblance pour des bits d'informations émis selon

$$L(\hat{u}_{k,1}) \approx$$

$$\max_{\substack{(A(i),B(i)) \\ u_{k,1}(i)=+1}} \left\{ \frac{1}{2\,\sigma_{\hat{y}1}^2} \sum_{i=1}^{n_T} \sum_{j=1}^{n_R} \left| h^{(i,j)} \right|^2 \left[ \mathrm{Re}\{A(i)\,\hat{y}_1^*\} + \mathrm{Re}\{B(i)\,\hat{y}_2^*\} \right] + \frac{1}{2} u(i)^T L_a(u) \right\} -$$

$$\max_{\substack{(A(i),B(i)) \\ u_{k,1}(i)=-1}} \left\{ \frac{1}{2\,\sigma_{\hat{y}1}^2} \sum_{i=1}^{n_T} \sum_{j=1}^{n_R} \left| h^{(i,j)} \right|^2 \left[ \mathrm{Re}\{A(i)\,\hat{y}_1^*\} + \mathrm{Re}\{B(i)\,\hat{y}_2^*\} \right] + \frac{1}{2} u(i)^T L_a(u) \right\}$$

dans lesquelles

[A (i), B (i)] est un vecteur des points de constellation liés du système à diversité d'émission différentielle avec i ∈ {1, ..., M} ;

le premier opérateur *max* est appliqué à tous les points de constellations [A (i), B (i)] du système à diversité d'émission différentielle et des bits d'émission liés $u_{k,l}$ (i) ayant une valeur de + 1 ;

le second opérateur *max* est appliqué à tous les points de constellations [A (i), B (i)] du système à diversité d'émission différentielle et des bits d'émission liés $u_{k,l}$ (i) ayant une valeur de - 1 ;

$\sigma_{\hat{Y}1}^2$ est une mesure de variance de bruit pour le bruit additif sur des canaux d'émission équivalents ;

$n_T$ est le nombre d'antennes d'émission utilisées pour parvenir à une diversité d'émission ;

$n_R$ est le nombre d'antennes de réception utilisées pour parvenir à une réception en diversité ;

$h^{(i,j)}$ est un gain d'une antenne d'émission i à une antenne de réception j à l'instant k ;

\* est un opérateur conjugué complexe ;

Re est un opérateur à partie réelle ;

u (i) est un candidat vectoriel pour une décision sur des bits d'émission ;

T est un opérateur de transposition ; et

$L_a$ est un vecteur de logarithmes de rapports de vraisemblance a priori correspondant à la représentation vectorielle de bits d'émission.

**15.** Détecteur à sortie pondérée non cohérente selon la revendication 14, **caractérisé en ce que** l'unité d'enlèvement de correspondance pondérée comprend une première unité d'évaluation conçue pour évaluer une valeur de

$$\sum_{i=1}^{n_T} \sum_{j=1}^{n_R} \left| h^{(i,j)} \right|^2 \text{ et } \sigma_{\hat{Y}1}^2 \text{ en utilisant des techniques d'évaluation à entrée unique sortie unique.}$$

**16.** Détecteur à sortie pondérée non cohérente selon la revendication 15, **caractérisé en ce que** la première unité d'évaluation est conçue pour réaliser une évaluation de canal à entrée unique sortie unique par l'utilisation de symboles d'apprentissage insérés dans le système à diversité d'émission différentielle avant le codage différentiel.

**17.** Détecteur à sortie pondérée non cohérente selon la revendication 14, **caractérisé en ce que** l'unité d'enlèvement de correspondance pondérée comprend une deuxième unité d'évaluation de canal conçue pour évaluer une valeur

$$\text{de } \frac{1}{\sigma_{\hat{Y}1}^2} \sum_{i=1}^{n_T} \sum_{j=1}^{n_R} \left| h^{(i,j)} \right|^2 \text{ en tant que valeur constante de } n_T \cdot n_R.$$

**18.** Détecteur à sortie pondérée non cohérente selon la revendication 14, **caractérisé en ce que** l'unité d'enlèvement de correspondance pondérée comprend une troisième unité d'évaluation conçue pour évaluer une valeur de

$$\frac{1}{\sigma_{\hat{Y}1}^2} \sum_{i=1}^{n_T} \sum_{j=1}^{n_R} \left| h^{(i,j)} \right|^2 \text{ en tant que valeur déduite à partir de variables de décision } (\hat{y}1, \hat{y}2) \text{ selon}$$

$$h_e = \sqrt{|\hat{y}_1|^2 + |\hat{y}_2|^2}$$

**19.** Produit formant programme d'ordinateur pouvant être directement chargé dans la mémoire interne d'un détecteur à sortie pondérée comprenant des parties de code logiciel pour effectuer les étapes d'une des revendications 1 à 9, lorsque le produit est exécuté sur un processeur d'un détecteur à sortie pondérée.

Fig. 1

Fig. 2

```
┌─────────────────────────────────────────────────────────┐
│                                                    ~ 10   │
│   ┌─────────────────────────────────────────┐            │
│   │                                          │            │
│   │    Channel Model Transformation Unit     │  ~ 12      │
│   │                                          │            │
│   └─────────────────────────────────────────┘            │
│                                                           │
│   ┌─────────────────────────────────────────┐            │
│   │                                          │            │
│   │          Soft Demapping Unit             │  ~ 14      │
│   │                                          │            │
│   └─────────────────────────────────────────┘            │
│                                                           │
└─────────────────────────────────────────────────────────┘
```

# Fig. 3

```
┌─────────────────────────────────────────────────┐
│                                                  │  ~ S10
│   Transform a Multiple Input Multiple Output     │
│   Channel Model into a Single Input Single       │
│   Output Channel Model At Least for Generation   │
│   of DecisionVariables                           │
│                                                  │
└─────────────────────────────────────────────────┘
                        │
                        ▼
┌─────────────────────────────────────────────────┐
│                                                  │  ~ S12
│   Deliver Soft Ouput Detection Result, e.g.,     │
│   Bit Decisions and related Reliability          │
│   Information, on the Basis of the Determined     │
│   Decision Variables                             │
│                                                  │
└─────────────────────────────────────────────────┘
```

# Fig. 4

Fig. 5

Fig. 6

$$A_k \xrightarrow{\hspace{2cm}} \otimes \xrightarrow{\hspace{2cm}} \oplus \xrightarrow{\hspace{1cm}} \hat{y}_1$$

$$\sum_{i=1}^{n_T}\sum_{j=1}^{n_R}\left|h^{(ij)}\right|^2 \qquad \sigma_{\hat{y}_1}^2$$

$$B_k \xrightarrow{\hspace{2cm}} \otimes \xrightarrow{\hspace{2cm}} \oplus \xrightarrow{\hspace{1cm}} \hat{y}_2$$

$$\sum_{i=1}^{n_T}\sum_{j=1}^{n_R}\left|h^{(ij)}\right|^2 \qquad \sigma_{\hat{y}_2}^2$$

Fig. 7

22

14

Interface Unit

24

Control Unit

26

Log Likelihood Calculation Unit

32

Max Log
Approximation Unit

28

Channel Estimation Unit

Single Input Single Output
Estimation Unit    34

Constant Value
Estimation Unit    36

Decision Variable
Estimation Unit    38

30

Filtering and/or Averaging Unit

Fig. 8

Fig. 9